# EUROPEAN PATENT APPLICATION

(11) **EP 4 852 566 A1**
(43) Date of publication of application: **09.12.2026**
(21) Application number: 25751583.3
(22) Date of filing: 06.02.2025
(51) Int. Cl.: H04W 72/0453

(54) **COMMUNICATION METHOD AND APPARATUS BASED ON DISTRIBUTED RESOURCE UNIT**

(30) Priority: 08.02.2024 CN 202410179448
(71) Applicant: HUAWEI TECHNOLOGIES CO., LTD., Shenzhen, Guangdong 518129 (CN)
(72) Inventor: MAO, Zhi, Shenzhen, Guangdong 518129 (CN); YU, Jian, Shenzhen, Guangdong 518129 (CN); LIU, Chenchen, Shenzhen, Guangdong 518129 (CN); GAN, Ming, Shenzhen, Guangdong 518129 (CN)
(74) Representative: Huawei European IPR
(86) International application number: PCT/CN2025/076005
(87) International publication number: WO 2025/167984

(57) **Abstract**

This application relates to the wireless communication field, and in particular, to a communication method and apparatus based on a distributed resource unit. The method includes: an access point sends a trigger frame, where the trigger frame includes indication information, and the indication information indicates a dRU; and a station sends a PPDU by using the dRU indicated by the indication information. According to this application, spectrum utilization can be improved. This application supports 802.11 series protocols, for example, an 802.11bn/UHR/Wi-Fi 8 protocol, an 802.11be/EHT/Wi-Fi 7 protocol, an 802.11ax protocol, an 802.11a/b/g protocol, an 802.11n protocol, and an 802.11ac protocol; may further support a UWB protocol, a sensing protocol, or the like; and may further support a NearLink/spark link/nearlink standard protocol.

## Description

This application claims priority to Chinese Patent Application No. 202410179448.8, filed with the China National Intellectual Property Administration on February 8, 2024, and entitled "COMMUNICATION METHOD AND APPARATUS BASED ON DISTRIBUTED RESOURCE UNIT", which is incorporated herein by reference in its entirety.

### TECHNICAL FIELD

This application relates to the field of wireless communication technologies, and in particular, to a communication method and apparatus based on a distributed resource unit.

### BACKGROUND

The European Telecommunications Standards Institute (European Telecommunications Standards Institute, ETSI) has issued a regulation on a 6 GHz spectrum, which limits a maximum transmit power to 23 dBm (decibel-milliwatts, decibel-milliwatts), and a maximum power spectral density to 10 dBm/MHz (decibel-milliwatts/megahertz, decibel-milliwatts/megahertz). The Federal Communications Commission of the United States has also issued a regulation on the 6 GHz spectrum, which defines a low power indoor (low power indoor, LPI) communication mode and imposes strict limits on the maximum transmit power and a maximum frequency spectrum density. For an access point (access point, AP), the maximum transmit power is limited to 30 dBm, and the maximum power spectral density is limited to 5 dBm/MHz. For a station (Station, STA), the maximum transmit power is limited to 24 dBm, and the maximum power spectral density is limited to -1 dBm/MHz. A transmit power of a device is limited by both a maximum power and the maximum power spectral density, that is, the transmit power cannot exceed a maximum power value, and a transmit power spectral density (power spectral density, PSD) cannot exceed the maximum power spectral density. Compared with that of the maximum power, a limit of the maximum power spectral density is stricter, and an allowed maximum transmit power is generally more limited by a power spectral density. For a station, when a bandwidth is 320 MHz, a transmit power of the station reaches a limit of a specified maximum power. When the bandwidth is less than 320 MHz, due to a limitation of the maximum power spectral density, the station can only use a lower power (herein, a power lower than the specified maximum power) for sending.

Based on this, a distributed resource unit (distributed resource unit, dRU) technology is proposed to increase a transmit power. A basic idea of the dRU is to spread contiguous subcarriers in a resource unit (resource unit, RU) across a widest possible bandwidth, to reduce a quantity of subcarriers in 1 MHz, thereby increasing a transmit power of each subcarrier, and further increasing a total transmit power.

However, currently, how to use the dRU for communication is still to be explored.

### SUMMARY

Embodiments of this application provide a communication method and apparatus based on a distributed resource unit, to support uplink communication and/or downlink communication by using a dRU, and design a tone plan including more dRUs. In addition, embodiments of this application further provide a corresponding dRU indication method, to improve spectrum utilization.

The following describes this application from different aspects. It should be understood that mutual reference may be made to the following implementations and beneficial effects of different aspects.

According to a first aspect, this application provides a communication method based on a distributed resource unit. The method includes: a first communication apparatus receives a trigger frame, where the trigger frame includes indication information, and the indication information indicates a dRU in a dRU tone plan corresponding to a first bandwidth; and the first communication apparatus sends a physical layer protocol data unit (physical layer protocol data unit, PPDU) by using the dRU indicated by the indication information. The dRU tone plan corresponding to the first bandwidth includes any one of the following: nine 52-tone dRUs when the first bandwidth is 40 MHz, 18 52-tone dRUs when the first bandwidth is 80 MHz, 36 52-tone dRUs when the first bandwidth is 160 MHz, 72 52-tone dRUs when the first bandwidth is 320 MHz, nine 106-tone dRUs when the first bandwidth is 80 MHz, 18 106-tone dRUs when the first bandwidth is 160 MHz, or 36 106-tone dRUs when the first bandwidth is 320 MHz.

For example, the first communication apparatus may be a station.

For example, the dRU may be determined based on a size (size) and a location. A size (size) of the dRU may refer to a quantity of subcarriers in the dRU, and a location of the dRU may refer to locations of the subcarriers in the dRU in frequency domain. Generally, a subcarrier index range (subcarrier index range) may indicate locations of subcarriers in a dRU in frequency domain. Details are not described below.

In this application, the 26-tone dRU may be understood as a dRU including 26 subcarriers. Similarly, the 52-tone dRU may be understood as a dRU including 52 subcarriers, and the 106-tone dRU may be understood as a dRU including 106 subcarriers.

In this application, the dRU includes a plurality of subcarriers that are discrete in frequency domain. The plurality of discrete subcarriers may be partially discrete or fully discrete. In other words, the plurality of discrete subcarriers may include a part of contiguous subcarriers in frequency and a part of non-contiguous subcarriers in frequency, or the plurality of discrete subcarriers may be fully non-contiguous in frequency.

In this application, uplink transmission is scheduled by using a trigger frame, and indication information is carried in the trigger frame to indicate a dRU, so that uplink communication can be performed by using the dRU. In addition, compared with the conventional technology, the indication information can indicate more dRUs, so that more stations can be scheduled to perform uplink communication (one dRU is allocated to one station), thereby improving spectrum utilization of uplink transmission.

According to a second aspect, this application provides a communication method based on a distributed resource unit. The method includes: a second communication apparatus sends a trigger frame, where the trigger frame includes indication information, and the indication information indicates a dRU in a dRU tone plan corresponding to a first bandwidth; and the second communication apparatus receives a PPDU on the dRU indicated by the indication information. The dRU tone plan corresponding to the first bandwidth includes any one of the following: nine 52-tone dRUs when the first bandwidth is 40 MHz, 18 52-tone dRUs when the first bandwidth is 80 MHz, 36 52-tone dRUs when the first bandwidth is 160 MHz, 72 52-tone dRUs when the first bandwidth is 320 MHz, nine 106-tone dRUs when the first bandwidth is 80 MHz, 18 106-tone dRUs when the first bandwidth is 160 MHz, or 36 106-tone dRUs when the first bandwidth is 320 MHz.

For example, the second communication apparatus may be an access point.

With reference to the first aspect or the second aspect, in a possible implementation, the indication information includes an RU allocation subfield (RU Allocation subfield) and a primary/secondary 160 subfield (PS160 subfield). The RU allocation subfield and the primary/secondary 160 subfield may be used to jointly indicate the dRU. In this application, an existing RU/MRU indication may be reused to schedule a dRU for better compatibility.

For example, the nine 52-tone dRUs when the first bandwidth is 40 MHz include 52-tone dRUs whose physical dRU indexes are 1 to 9. The 18 52-tone dRUs when the first bandwidth is 80 MHz include 52-tone dRUs whose physical dRU indexes are 1 to 18. The 36 52-tone dRUs when the first bandwidth is 160 MHz include 52-tone dRUs whose physical dRU indexes are 1 to 36. The 72 52-tone dRUs when the first bandwidth is 320 MHz include 52-tone dRUs whose physical dRU indexes are 1 to 72. The 9 106-tone dRUs when the first bandwidth is 80 MHz include 106-tone dRUs whose physical dRU indexes are 1 to 9. The 18 106-tone dRUs when the first bandwidth is 160 MHz include 106-tone dRUs whose physical dRU indexes are 1 to 18. The 36 106-tone dRUs when the first bandwidth is 320 MHz include 106-tone dRUs whose physical dRU indexes are 1 to 36.

For example, an indication (applicable to a transmit end)/interpretation (applicable to a receive end) of the primary/secondary 160 subfield and the RU allocation subfield includes one or more of the following:

| Primary/secondary 160 subfield | B0 of the RU allocation subfield | B7 to B1 of the RU allocation subfield | Bandwidth BW (MHz) | dRU size | dRU index | Physical dRU index |
|---|---|---|---|---|---|---|
| 0 | | First value | 40 | 52 | dRU 9 | dRU 9 |
| 0 to 3 | | Second value and third value | 80, 160, or 320 | 52 | dRU 17 and dRU 18, respectively | 16×(BW/80-1)+2×N+dRU index |
| 0 to 3 | | Fourth value | 80, 160, or 320 | 106 | dRU 9 | 8×(BW/80-1)+N+dRU index |
| 0 to 3 | | Fifth value | 80, 160, or 320 | 26 | dRU 19 | 37×N + dRU index |

A value of N is determined based on some or all of the bandwidth BW, the primary/secondary 160 subfield, a B0 bit of the RU allocation subfield, and configuration information. For example, at least one of the first value, the second value, the third value, and the fourth value is a value in a range of 107 to 127. The fifth value is 18.

In this application, based on reusing an existing RU/MRU indication to schedule a dRU resource, and an additional entry is added to indicate more dRUs, so that an access point can schedule more stations to perform uplink communication (one dRU is allocated to one station), thereby improving spectrum utilization of uplink transmission. In addition, this application can further resolve a problem that indication signaling is insufficient when the RU/MRU indication method is reused to indicate the dRU.

With reference to the first aspect or the second aspect, in a possible implementation, the 52-tone dRU whose physical dRU index is 9 when the first bandwidth is 40 MHz includes subcarriers of 26-tone dRUs whose physical dRU indexes are 5 and 14.

For example, indexes of subcarriers included in the 26-tone dRU whose physical dRU index is 5 are [-229, -203, -185, -167, -153, -135, -117, -99, -81, -63, -45, -31, -13, 13, 31, 45, 63, 81, 99, 117, 135, 153, 167, 185, 203, 229]; and indexes of subcarriers included in the 26-tone dRU whose physical dRU index is 14 are [-234, -216, -198, -180, -162, -148, -130, -112, -86, -68, -50, -36, -18, 18, 36, 50, 68, 86, 112, 130, 148, 162, 180, 198, 216, 234].

In this application, designing the 9^{th} 52-tone dRU at the 40 MHz bandwidth can improve spectrum utilization.

With reference to the first aspect or the second aspect, in a possible implementation, the 52-tone dRU whose physical dRU index is 17 when the first bandwidth is 80 MHz includes subcarriers of 26-tone dRUs whose physical dRU indexes are 5 and 14. The 52-tone dRU whose physical dRU index is 18 when the first bandwidth is 80 MHz includes subcarriers of 26-tone dRUs whose physical dRU indexes are 24 and 33.

With reference to the first aspect or the second aspect, in a possible implementation, the 106-tone dRU whose physical dRU index is 9 when the first bandwidth is 80 MHz includes subcarriers of 26-tone dRUs whose physical dRU indexes are 5, 14, 24, and 33, and subcarriers whose subcarrier indexes are [-19, 19].

For example, at the 80 MHz bandwidth, indexes of subcarriers included in the 26-tone dRU whose physical dRU index is 5 are [-477, -444, -398, -362, -329, -291, -255, -222, -185, -140, -107, -70, -33, 33, 70, 107, 140, 185, 222, 255, 291, 329, 362, 398, 444, 477]; indexes of subcarriers included in the 26-tone dRU whose physical dRU index is 14 are [-495, -462, -425, -380, -347, -310, -273, -237, -204, -158, -122, -89, -51, 51, 89, 122, 158, 204, 237, 273, 310, 347, 380, 425, 462, 495]; indexes of subcarriers included in the 26-tone dRU whose physical dRU index is 24 are [-482, -449, -411, -375, -342, -305, -260, -227, -190, -153, -117, -84, -38, 38, 84, 117, 153, 190, 227, 260, 305, 342, 375, 411, 449, 482]; and indexes of subcarriers included in the 26-tone dRU whose physical dRU index is 33 are [-500, -467, -430, -393, -357, -324, -278, -242, -209, -171, -135, -102, -65, 65, 102, 135, 171, 209, 242, 278, 324, 357, 393, 430, 467, 500].

In this application, designing the 17^{th} and 18^{th} 52-tone dRUs and the 9^{th} 106-tone dRU at the 80 MHz bandwidth can improve spectrum utilization.

With reference to the first aspect or the second aspect, in a possible implementation, the 106-tone dRU whose physical dRU index is 9 when the first bandwidth is 80 MHz includes subcarriers of 26-tone dRUs whose physical dRU indexes are 5, 14, 24, and 33, and subcarriers whose subcarrier indexes are [-32, 32].

For example, at the 80 MHz bandwidth, indexes of subcarriers included in the 26-tone dRU whose physical dRU index is 5 are [-477, -445, -401, -365, -333, -297, -261, -229, -193, -149, -117, -81, -45, 45, 81, 117, 149, 193, 229, 261, 297, 333, 365, 401, 445, 477]; indexes of subcarriers included in the 26-tone dRU whose physical dRU index is 14 are [-495, -463, -427, -383, -351, -315, -279, -243, -211, -167, -131, -99, -63, 63, 99, 131, 167, 211, 243, 279, 315, 351, 383, 427, 463, 495]; indexes of subcarriers included in the 26-tone dRU whose physical dRU index is 24 are [-482, -450, -414, -378, -346, -310, -266, -234, -198, -162, -126, -94, -50, 50, 94, 126, 162, 198, 234, 266, 310, 346, 378, 414, 450, 482]; and indexes of subcarriers included in the 26-tone dRU whose physical dRU index is 33 are [-500, -468, -432, -396, -360, -328, -284, -248, -216, -180, -144, -112, -76, 76, 112, 144, 180, 216, 248, 284, 328, 360, 396, 432, 468, 500].

With reference to the first aspect or the second aspect, in a possible implementation, the 52-tone dRU whose physical dRU index is 33 when the first bandwidth is 160 MHz includes subcarriers of 26-tone dRUs whose physical dRU indexes are 5 and 14. The 52-tone dRU whose physical dRU index is 34 when the first bandwidth is 160 MHz includes subcarriers of 26-tone dRUs whose physical dRU indexes are 24 and 33. The 52-tone dRU whose physical dRU index is 35 when the first bandwidth is 160 MHz includes subcarriers of 26-tone dRUs whose physical dRU indexes are 42 and 51. The 52-tone dRU whose physical dRU index is 36 when the first bandwidth is 160 MHz includes subcarriers of 26-tone dRUs whose physical dRU indexes are 61 and 70.

With reference to the first aspect or the second aspect, in a possible implementation, the 106-tone dRU whose physical dRU index is 17 when the first bandwidth is 160 MHz includes subcarriers of 26-tone dRUs whose physical dRU indexes are 5, 14, 24, and 33, and subcarriers whose subcarrier indexes are [-493, 493]. The 106-tone dRU whose physical dRU index is 18 when the first bandwidth is 160 MHz includes subcarriers of 26-tone dRUs whose physical dRU indexes are 42, 51, 61, and 70, and subcarriers whose subcarrier indexes are [-531, 531].

For example, at the 160 MHz bandwidth, indexes of subcarriers included in the 26-tone dRU whose physical dRU index is 5 are [-955, -873, -803, -733, -651, -581, -448, -378, -304, -234, -156, -84, -14, 14, 84, 156, 234, 304, 378, 448, 581, 651, 733, 803, 873, 955]; indexes of subcarriers included in the 26-tone dRU whose physical dRU index is 14 are [-987, -909, -841, -765, -695, -619, -545, -410, -342, -272, -188, -120, -46, 46, 120, 188, 272, 342, 410, 545, 619, 695, 765, 841, 909, 987]; indexes of subcarriers included in the 26-tone dRU whose physical dRU index is 24 are [-973, -891, -821, -747, -669, -601, -474, -396, -324, -254, -170, -102, -32, 32, 102, 170, 254, 324, 396, 474, 601, 669, 747, 821, 891, 973]; indexes of subcarriers included in the 26-tone dRU whose physical dRU index is 33 are [-1005, -935, -859, -785, -715, -633, - 563, -428, -360, -286, -208, -138, -64, 64, 138, 208, 286, 360, 428, 563, 633, 715, 785, 859, 935, 1005]; indexes of subcarriers included in the 26-tone dRU whose physical dRU index is 42 are [-960, -886, -816, -738, -664, -596, -461, -391, -309, -239, -165, -89, -19, 19, 89, 165, 239, 309, 391, 461, 596, 664, 738, 816, 886, 960]; indexes of subcarriers included in the 26-tone dRU whose physical dRU index is 51 are [-992, -922, -854, -770, -700, -628, -550, -423, -355, -277, -203, -133, -51, 51, 133, 203, 277, 355, 423, 550, 628, 700, 770, 854, 922, 992]; indexes of subcarriers included in the 26-tone dRU whose physical dRU index is 61 are [-978, -904, -836, -752, -682, -614, -479, -405, -329, -259, -183, -115, -37, 37, 115, 183, 259, 329, 405, 479, 614, 682, 752, 836, 904, 978]; and indexes of subcarriers included in the 26-tone dRU whose physical dRU index is 70 are [-1010, -940, -868, -790, -720, -646, -576, -443, -373, -291, -221, -151, -69, 69, 151, 221, 291, 373, 443, 576, 646, 720, 790, 868, 940, 1010].

According to a third aspect, this application provides a communication apparatus. The communication apparatus is configured to perform the method according to any one of the first aspect or the possible implementations of the first aspect. The communication apparatus includes a module configured to perform the method according to any one of the first aspect or the possible implementations of the first aspect.

According to a fourth aspect, this application provides a communication apparatus. The communication apparatus is configured to perform the method according to any one of the second aspect or the possible implementations of the second aspect. The communication apparatus includes a module configured to perform the method according to any one of the second aspect or the possible implementations of the second aspect.

In the third aspect or the fourth aspect, the communication apparatus may include a transceiver module and a processing module. For specific descriptions of the transceiver module and the processing module, refer to apparatus embodiments provided below. For beneficial effects of the third aspect and the fourth aspect, refer to the related descriptions of the first aspect and the second aspect. Details are not described herein again.

According to a fifth aspect, this application provides a communication method based on a distributed resource unit. The method includes: a first communication apparatus generates a PPDU based on a dRU tone plan for a 40 MHz bandwidth, where one or more dRUs corresponding to the dRU tone plan include nine 52-tone dRUs; and the first communication apparatus sends the PPDU.

For ease of description, in this application, "one or more dRUs corresponding to a dRU tone plan" is briefly referred to as "dRU tone plan (dRU tone plan)". In other words, "dRU tone plan" described in this application may be understood as "one or more dRUs corresponding to the dRU tone plan". Details are not described below.

For example, for the dRU tone plan at the 40 MHz bandwidth, refer to descriptions in the following embodiments. Details are not described herein again.

For example, the first communication apparatus may be an access point or a station.

In this application, nine 52-tone dRUs are defined in the 40 MHz bandwidth, so that more frequency domain resources can be used at the 40 MHz bandwidth, thereby improving spectrum utilization, and increasing a transmit power of a device without increasing a power spectral density.

According to a sixth aspect, this application provides a communication method based on a distributed resource unit. The method includes: a second communication apparatus receives a PPDU based on a dRU tone plan at a 40 MHz bandwidth, where the dRU tone plan includes nine 52-tone dRUs; and a first communication apparatus processes the PPDU. For example, the second communication apparatus receives the PPDU based on a dRU in the dRU tone plan at the 40 MHz bandwidth.

For example, the second communication apparatus may be a station or an access point.

With reference to the fifth aspect or the sixth aspect, in a possible implementation, a 52-tone dRU whose physical dRU index is 9 in the nine 52-tone dRUs includes subcarriers of 26-tone dRUs whose physical dRU indexes are 5 and 14.

For example, indexes of subcarriers included in the 26-tone dRU whose physical dRU index is 5 are [-229, -203, -185, -167, -153, -135, -117, -99, -81, -63, -45, -31, -13, 13, 31, 45, 63, 81, 99, 117, 135, 153, 167, 185, 203, 229]; and indexes of subcarriers included in the 26-tone dRU whose physical dRU index is 14 are [-234, -216, -198, -180, -162, -148, -130, -112, -86, -68, -50, -36, -18, 18, 36, 50, 68, 86, 112, 130, 148, 162, 180, 198, 216, 234].

In this application, designing the 9^{th} 52-tone dRU at the 40 MHz bandwidth can improve spectrum utilization.

According to a seventh aspect, this application provides a communication apparatus. The communication apparatus is configured to perform the method according to any one of the fifth aspect or the possible implementations of the fifth aspect. The communication apparatus includes a module configured to perform the method according to any one of the fifth aspect or the possible implementations of the fifth aspect.

According to an eighth aspect, this application provides a communication apparatus. The communication apparatus is configured to perform the method according to any one of the sixth aspect or the possible implementations of the sixth aspect. The communication apparatus includes a module configured to perform the method according to any one of the sixth aspect or the possible implementations of the sixth aspect.

In the seventh aspect or the eighth aspect, the communication apparatus may include a transceiver module and a processing module. For specific descriptions of the transceiver module and the processing module, refer to apparatus embodiments provided below. For beneficial effects of the seventh aspect and the eighth aspect, refer to related descriptions of the fifth aspect and the sixth aspect. Details are not described herein again.

According to a ninth aspect, this application provides a communication method based on a distributed resource unit. The method includes: a first communication apparatus generates a PPDU based on a dRU tone plan at an 80 MHz bandwidth, where the dRU tone plan includes 18 52-tone dRUs or nine 106-tone dRUs; and the first communication apparatus sends the PPDU.

For example, for the dRU tone plan at the 80 MHz bandwidth, refer to descriptions in the following embodiments. Details are not described herein again.

For example, the first communication apparatus may be an access point or a station.

In this application, 18 52-tone dRUs or nine 106-tone dRUs are defined in the 80 MHz bandwidth, so that more frequency domain resources can be used at the 80 MHz bandwidth, thereby improving spectrum utilization, and increasing a transmit power of a device without increasing a power spectral density.

According to a tenth aspect, this application provides a communication method based on a distributed resource unit. The method includes: a second communication apparatus receives a PPDU based on a dRU tone plan at an 80 MHz bandwidth, where the dRU tone plan includes 18 52-tone dRUs or nine 106-tone dRUs; and a first communication apparatus processes the PPDU. For example, the second communication apparatus receives the PPDU based on a dRU in the dRU tone plan at the 80 MHz bandwidth.

For example, the second communication apparatus may be a station or an access point.

With reference to the ninth aspect or the tenth aspect, in a possible implementation, a 52-tone dRU whose physical dRU index is 17 in the 18 52-tone dRUs includes subcarriers of 26-tone dRUs whose physical dRU indexes are 5 and 14. The 52-tone dRU whose physical dRU index is 18 in the 18 52-tone dRUs includes subcarriers of 26-tone dRUs whose physical dRU indexes are 24 and 33.

With reference to the ninth aspect or the tenth aspect, in a possible implementation, a 106-tone dRU whose physical dRU index is 9 in the nine 106-tone dRUs includes subcarriers of 26-tone dRUs whose physical dRU indexes are 5, 14, 24, and 33 and subcarriers whose subcarrier indexes are [-19, 19].

For example, indexes of subcarriers included in the 26-tone dRU whose physical dRU index is 5 are [-477, -444, -398, -362, -329, -291, -255, -222, -185, -140, -107, -70, -33, 33, 70, 107, 140, 185, 222, 255, 291, 329, 362, 398, 444, 477]; indexes of subcarriers included in the 26-tone dRU whose physical dRU index is 14 are [-495, -462, -425, -380, -347, -310, -273, - 237, -204, -158, -122, -89, -51, 51, 89, 122, 158, 204, 237, 273, 310, 347, 380, 425, 462, 495]; indexes of subcarriers included in the 26-tone dRU whose physical dRU index is 24 are [-482, - 449, -411, -375, -342, -305, -260, -227, -190, -153, -117, -84, -38, 38, 84, 117, 153, 190, 227, 260, 305, 342, 375, 411, 449, 482]; and indexes of subcarriers included in the 26-tone dRU whose physical dRU index is 33 are [-500, -467, -430, -393, -357, -324, -278, -242, -209, -171, -135, -102, -65, 65, 102, 135, 171, 209, 242, 278, 324, 357, 393, 430, 467, 500].

In this application, designing the 17^{th} and 18^{th} 52-tone dRUs and the 9^{th} 106-tone dRU at the 80 MHz bandwidth can improve spectrum utilization.

With reference to the ninth aspect or the tenth aspect, in a possible implementation, a 106-tone dRU whose physical dRU index is 9 in the nine 106-tone dRUs includes subcarriers of 26-tone dRUs whose physical dRU indexes are 5, 14, 24, and 33 and subcarriers whose subcarrier indexes are [-32, 32].

For example, indexes of subcarriers included in the 26-tone dRU whose physical dRU index is 5 are [-477, -445, -401, -365, -333, -297, -261, -229, -193, -149, -117, -81, -45, 45, 81, 117, 149, 193, 229, 261, 297, 333, 365, 401, 445, 477]; indexes of subcarriers included in the 26-tone dRU whose physical dRU index is 14 are [-495, -463, -427, -383, -351, -315, -279, - 243, -211, -167, -131, -99, -63, 63, 99, 131, 167, 211, 243, 279, 315, 351, 383, 427, 463, 495]; indexes of subcarriers included in the 26-tone dRU whose physical dRU index is 24 are [-482, - 450, -414, -378, -346, -310, -266, -234, -198, -162, -126, -94, -50, 50, 94, 126, 162, 198, 234, 266, 310, 346, 378, 414, 450, 482]; and indexes of subcarriers included in the 26-tone dRU whose physical dRU index is 33 are [-500, -468, -432, -396, -360, -328, -284, -248, -216, -180, -144, -112, -76, 76, 112, 144, 180, 216, 248, 284, 328, 360, 396, 432, 468, 500].

According to an eleventh aspect, this application provides a communication apparatus. The communication apparatus is configured to perform the method according to any one of the ninth aspect or the possible implementations of the ninth aspect. The communication apparatus includes a module configured to perform the method according to any one of the ninth aspect or the possible implementations of the ninth aspect.

According to a twelfth aspect, this application provides a communication apparatus. The communication apparatus is configured to perform the method according to any one of the tenth aspect or the possible implementations of the tenth aspect. The communication apparatus includes a module configured to perform the method according to any one of the tenth aspect or the possible implementations of the tenth aspect.

In the eleventh aspect or the twelfth aspect, the communication apparatus may include a transceiver module and a processing module. For specific descriptions of the transceiver module and the processing module, refer to apparatus embodiments provided below. For beneficial effects of the eleventh aspect and the twelfth aspect, refer to related descriptions of the ninth aspect and the tenth aspect. Details are not described herein again.

According to a thirteenth aspect, this application provides a communication method based on a distributed resource unit. The method includes: a first communication apparatus generates a PPDU based on a dRU tone plan at a 160 MHz bandwidth, where the dRU tone plan includes 36 52-tone dRUs or 18 106-tone dRUs; and the first communication apparatus sends the PPDU.

For example, the first communication apparatus may be an access point or a station.

In this application, 36 52-tone dRUs or 18 106-tone dRUs are defined in the 160 MHz bandwidth, so that more frequency domain resources can be used at the 160 MHz bandwidth, thereby improving spectrum utilization, and increasing a transmit power of a device without increasing a power spectral density.

According to a fourteenth aspect, this application provides a communication method based on a distributed resource unit. The method includes: a second communication apparatus receives a PPDU based on a dRU tone plan at a 160 MHz bandwidth, where the dRU tone plan includes 36 52-tone dRUs or 18 106-tone dRUs; and a first communication apparatus processes the PPDU. For example, the second communication apparatus receives the PPDU based on a dRU in the dRU tone plan at the 160 MHz bandwidth.

For example, the second communication apparatus may be a station or an access point.

With reference to the thirteenth aspect or the fourteenth aspect, in a possible implementation, a 52-tone dRU whose physical dRU index is 33 in the 18 52-tone dRUs includes subcarriers of 26-tone dRUs whose physical dRU indexes are 5 and 14. A 52-tone dRU whose physical dRU index is 34 in the 18 52-tone dRUs includes subcarriers of 26-tone dRUs whose physical dRU indexes are 24 and 33. A 52-tone dRU whose physical dRU index is 35 in the 18 52-tone dRUs includes subcarriers of 26-tone dRUs whose physical dRU indexes are 42 and 51. A 52-tone dRU whose physical dRU index is 36 in the 18 52-tone dRUs includes subcarriers of 26-tone dRUs whose physical dRU indexes are 61 and 70.

With reference to the thirteenth aspect or the fourteenth aspect, in a possible implementation, a 106-tone dRU whose physical dRU index is 17 in the nine 106-tone dRUs includes subcarriers of 26-tone dRUs whose physical dRU indexes are 5, 14, 24, and 33, and subcarriers whose subcarrier indexes are [-493, 493]. A 106-tone dRU whose physical dRU index is 18 in the nine 106-tone dRUs includes subcarriers of 26-tone dRUs whose physical dRU indexes are 42, 51, 61, and 70, and subcarriers whose subcarrier indexes are [-531, 531].

For example, indexes of subcarriers included in the 26-tone dRU whose physical dRU index is 5 are [-955, -873, -803, -733, -651, -581, -448, -378, -304, -234, -156, -84, -14, 14, 84, 156, 234, 304, 378, 448, 581, 651, 733, 803, 873, 955]; indexes of subcarriers included in the 26-tone dRU whose physical dRU index is 14 are [-987, -909, -841, -765, -695, -619, -545, - 410, -342, -272, -188, -120, -46, 46, 120, 188, 272, 342, 410, 545, 619, 695, 765, 841, 909, 987]; indexes of subcarriers included in the 26-tone dRU whose physical dRU index is 24 are [-973, - 891, -821, -747, -669, -601, -474, -396, -324, -254, -170, -102, -32, 32, 102, 170, 254, 324, 396, 474, 601, 669, 747, 821, 891, 973]; indexes of subcarriers included in the 26-tone dRU whose physical dRU index is 33 are [-1005, -935, -859, -785, -715, -633, -563, -428, -360, -286, - 208, -138, -64, 64, 138, 208, 286, 360, 428, 563, 633, 715, 785, 859, 935, 1005]; indexes of subcarriers included in the 26-tone dRU whose physical dRU index is 42 are [-960, -886, -816, -738, -664, -596, -461, -391, -309, -239, -165, -89, -19, 19, 89, 165, 239, 309, 391, 461, 596, 664, 738, 816, 886, 960]; indexes of subcarriers included in the 26-tone dRU whose physical dRU index is 51 are [-992, -922, -854, -770, -700, -628, -550, -423, -355, -277, -203, -133, -51, 51, 133, 203, 277, 355, 423, 550, 628, 700, 770, 854, 922, 992]; indexes of subcarriers included in the 26-tone dRU whose physical dRU index is 61 are [-978, -904, -836, -752, -682, -614, - 479, -405, -329, -259, -183, -115, -37, 37, 115, 183, 259, 329, 405, 479, 614, 682, 752, 836, 904, 978]; and indexes of subcarriers included in the 26-tone dRU whose physical dRU index is 70 are [-1010, -940, -868, -790, -720, -646, -576, -443, -373, -291, -221, -151, -69, 69, 151, 221, 291, 373, 443, 576, 646, 720, 790, 868, 940, 1010].

In this application, designing the 33^{rd} to 36^{th} 52-tone dRUs and the 17^{th} and 18^{th} 106-tone dRUs at the 160 MHz bandwidth can improve spectrum utilization.

According to a fifteenth aspect, this application provides a communication apparatus. The communication apparatus is configured to perform the method according to any one of the thirteenth aspect or the possible implementations of the thirteenth aspect. The communication apparatus includes a module configured to perform the method according to any one of the thirteenth aspect or the possible implementations of the thirteenth aspect.

According to a sixteenth aspect, this application provides a communication apparatus. The communication apparatus is configured to perform the method according to any one of the fourteenth aspect or the possible implementations of the fourteenth aspect. The communication apparatus includes a module configured to perform the method according to any one of the fourteenth aspect or the possible implementations of the fourteenth aspect.

In the fifteenth aspect or the sixteenth aspect, the communication apparatus may include a transceiver module and a processing module. For specific descriptions of the transceiver module and the processing module, refer to apparatus embodiments provided below. For beneficial effects of the fifteenth aspect and the sixteenth aspect, refer to related descriptions of the thirteenth aspect and the fourteenth aspect. Details are not described herein again.

According to a seventeenth aspect, this application provides a communication apparatus. The communication apparatus includes a processor, configured to perform the method according to any one of the first aspect, the second aspect, the fifth aspect, the sixth aspect, the ninth aspect, the tenth aspect, the thirteenth aspect, the fourteenth aspect, or the possible implementations of any one of the aspects. Alternatively, the processor is configured to execute a program stored in a memory. When the program is executed, the method according to any one of the first aspect, the second aspect, the fifth aspect, the sixth aspect, the ninth aspect, the tenth aspect, the thirteenth aspect, the fourteenth aspect, or the possible implementations of any one of the aspects is performed.

With reference to the seventeenth aspect, in a possible implementation, the memory is located outside the communication apparatus.

With reference to the seventeenth aspect, in a possible implementation, the memory is located inside the communication apparatus.

In this application, the processor and the memory may alternatively be integrated into one component. In other words, the processor and the memory may alternatively be integrated together. For example, the communication apparatus may be a chip.

With reference to the seventeenth aspect, in a possible implementation, the communication apparatus further includes a transceiver, and the transceiver is configured to send or receive a PPDU/trigger frame.

According to an eighteenth aspect, this application provides a communication apparatus. The communication apparatus includes a logic circuit and an interface, and the logic circuit is coupled to the interface. The interface is configured to exchange (or receive, send, or input/output) information or data, and the logic circuit is configured to run program instructions, to enable the communication apparatus to perform the method according to any one of the first aspect, the second aspect, the fifth aspect, the sixth aspect, the ninth aspect, the tenth aspect, the thirteenth aspect, the fourteenth aspect, or the possible implementations of any one of the aspects. The interface circuit may be a communication interface or a transceiver. The transceiver may be a radio frequency module in the communication apparatus, a combination of a radio frequency module and an antenna, or an input/output interface of a chip or a circuit.

According to a nineteenth aspect, this application provides a readable storage medium. The readable storage medium stores program instructions. When the program instructions are run on a computer, the computer is enabled to perform the method according to any one of the first aspect, the second aspect, the fifth aspect, the sixth aspect, the ninth aspect, the tenth aspect, the thirteenth aspect, the fourteenth aspect, or the possible implementations of any one of the aspects.

According to a twentieth aspect, this application provides a computer program product including program instructions. When the program instructions are run, the method according to any one of the first aspect, the second aspect, the fifth aspect, the sixth aspect, the ninth aspect, the tenth aspect, the thirteenth aspect, the fourteenth aspect, or the possible implementations of any one of the aspects is enabled to be performed.

According to a twenty-first aspect, this application provides a communication system. The communication system includes a first communication apparatus and a second communication apparatus. The first communication apparatus is configured to perform the method according to any one of the first aspect, the fifth aspect, the ninth aspect, the thirteenth aspect, or the possible implementations of any one of the aspects. The second communication apparatus is configured to perform the method according to any one of the second aspect, the sixth aspect, the tenth aspect, the fourteenth aspect, or the possible implementations of any one of the aspects.

For technical effects achieved in the foregoing aspects, mutual reference may be made to the foregoing aspects, or reference may be made to beneficial effects in the following method embodiments. Details are not described herein.

### BRIEF DESCRIPTION OF DRAWINGS

FIG. 1 is a diagram of a network architecture of a wireless communication system according to an embodiment of this application;
FIG. 2A is a diagram of a structure of an access point according to an embodiment of this application;
FIG. 2B is a diagram of a structure of a station according to an embodiment of this application;
FIG. 3 is a diagram of a tone plan and an RU plan at 20 MHz according to an embodiment of this application;
FIG. 4 is a diagram of a tone plan and an RU plan at 40 MHz according to an embodiment of this application;
FIG. 5 is a diagram of a tone plan and an RU plan at 80 MHz according to an embodiment of this application;
FIG. 6 is a schematic flowchart of uplink multi-user transmission according to an embodiment of this application;
FIG. 7 is a diagram of a frame format of an EHT variant user information field according to an embodiment of this application;
FIG. 8 is a schematic flowchart of a communication method based on a distributed resource unit according to an embodiment of this application;
FIG. 9 is a block diagram of dRU transmission based on BCC coding according to an embodiment of this application;
FIG. 10 is a block diagram of dRU transmission based on LDPC coding according to an embodiment of this application;
FIG. 11 is a diagram of a logical architecture of dRUs in a 40 MHz bandwidth according to an embodiment of this application;
FIG. 12 is a diagram of a logical architecture of dRUs in an 80 MHz bandwidth according to an embodiment of this application;
FIG. 13 is another schematic flowchart of a communication method based on a distributed resource unit according to an embodiment of this application;
FIG. 14 is a diagram of a structure of a communication apparatus according to an embodiment of this application;
FIG. 15 is a diagram of another structure of a communication apparatus according to an embodiment of this application; and
FIG. 16 is a diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, "first", "second", and the like are merely intended to distinguish between different objects but do not indicate a particular order. In addition, unless otherwise specified, "/" represents "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "One or more of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c. Each of a, b, and c may be singular or plural.

Terms "include", "have", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It may be understood that, in this application, "when", "if", and "provided that" all mean that an apparatus performs corresponding processing in an objective situation, and are not intended to limit time. The terms do not mean that the apparatus is required to perform a determining action during implementation, and do not mean any other limitation. The apparatus performing the corresponding processing in the objective situation includes: The corresponding processing can be performed when the objective situation is met; or the corresponding processing can be performed only when the objective situation and other situations are met.

In this application, "simultaneously" may be understood as "concurrently" or being at a same time point, or may be understood as being in a period of time, or may be understood as being in a same periodicity. This may be specifically understood with reference to context.

In this application, unless otherwise specified, an element indicated in a singular form is intended to indicate "one or more", but does not indicate "one and only one".

It may be understood that in embodiments of this application, "B corresponding to A," "A corresponds to B," or a similar expression indicates that B is associated with A and B may be determined based on A. Determining B based on A does not mean that B is determined based only on A. B may alternatively be determined based on A and/or other information.

The technical solutions provided in embodiments of this application may be applied to a wireless local area network (wireless local area network, WLAN) scenario. For example, the technical solutions support Institute of Electrical and Electronics Engineers (institute of electrical and electronics engineers, IEEE) 802.11 related standards, for example, an 802.11a/b/g standard, an 802.11n standard, an 802.11ac standard, an 802.11ax standard, next-generation Wi-Fi protocols of IEEE 802.11ax, for example, 802.11be, Wi-Fi 7, and Extremely High Throughput (extremely high throughput, EHT), 802.11ad, 802.11ay, or 802.11bf, and for another example, a next generation of 802.11be, Wi-Fi 8, or the like. The technical solutions may further be applied to a wireless personal area network system based on ultra-wideband (ultra-wideband, UWB), for example, 802.15 series standards, may further be applied to a sensing (sensing) system, for example, 802.11bf series standards, may further be applied to an 802.11bn standard or an Ultra-High Reliability (ultra-high reliability, UHR) standard, and may further be applied to a NearLink/spark link/nearlink standard protocol. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

The technical solutions in embodiments of this application may be applied to a scenario of communication between an access point and a station, or may be applied to a scenario of communication between access points, or may be applied to a scenario of communication between stations. In embodiments of this application, the term "communication" may also be described as "data transmission", "information transmission", or "transmission". In embodiments of this application, the term "transmission" may also be described as "sending" and/or "receiving".

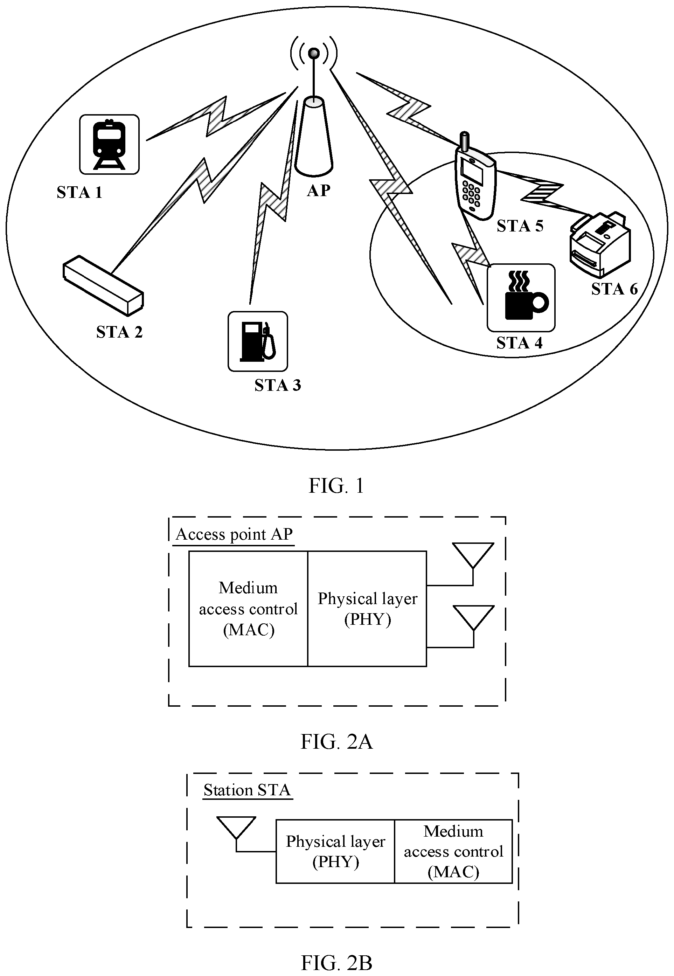

FIG. 1 is a diagram of a network architecture of a wireless communication system according to an embodiment of this application. As shown in FIG. 1, the wireless communication system may include one or more access point (access point, AP) stations (station, STA) and one or more non-access point stations (non-access point station, non-AP STA). For ease of description, in this specification, an access point station (AP STA) is briefly referred to as an access point (AP), and a non-access point station (non-AP STA) is briefly referred to as a station (STA). The AP and the STA support a WLAN communication protocol. The communication protocol may include 802.11bn (or referred to as UHR), and may further include protocols such as 802.11be, 802.11ax, and 802.11ac. Certainly, with continuous evolution and development of communication technologies, the communication protocol may further include a next-generation protocol of 802.11bn, and the like. A WLAN is used as an example, an apparatus for implementing the method in this application may be an AP and/or a STA in the WLAN, or a chip or a processing system installed in the AP and/or the STA.

It may be understood that FIG. 1 is described by using an example in which the wireless communication system includes one AP and six stations (STA 1, STA 2, STA 3, STA 4, STA 5, and STA 6). In actual application, the wireless communication system may include more or fewer APs and STAs. A quantity of APs and a quantity of STAs in the wireless communication system are not limited in this application.

In a possible implementation, an access point (for example, the AP in FIG. 1) may be an apparatus having a wireless communication function, supports communication by using a WLAN protocol, and has a function of communicating with another device (for example, a station or another access point) in a WLAN network. The apparatus having the wireless communication function may be an entire device, or may be a chip or processing system installed in the entire device. A device in which the chip or the processing system is installed may implement methods and functions in embodiments of this application under control of the chip or the processing system. The access point may be deployed in a home, inside a building, or inside a campus, and a coverage radius is dozens of meters to hundreds of meters. Certainly, the access point may alternatively be deployed outdoors. The access point may be understood as a bridge that connects a wired network and a wireless network, and is mainly used to connect various wireless network clients together and then connect the wireless network to the Ethernet. For example, the access point may be a terminal device (for example, a mobile phone) with a wireless fidelity (wireless fidelity, Wi-Fi) chip or a network device (for example, a communication entity such as a communication server, a router, a switch, or a bridge).

The access point in this application may be a device that supports the 802.11bn standard. Certainly, the access point may also support multiple WLAN standards of the 802.11 family, for example, 802.11be, 802.11bf, 802.11ax, 802.11ac, 802.11n, 802.11g, 802.11b, 802.11ad, 802.11ay, 802.11a, and the like. The access point may further support UWB or sensing-related protocols.

In a possible implementation, the station (for example, any station in FIG. 1) may be an apparatus having a wireless communication function, supports communication by using a WLAN protocol, and has a capability of communicating with another station or an access point in a WLAN network. The apparatus having the wireless communication function may be an entire device, or may be a chip or processing system installed in the entire device. A device in which the chip or the processing system is installed may implement methods and functions in embodiments of this application under control of the chip or the processing system. The station may alternatively be a wireless communication chip, a wireless sensor, a wireless communication terminal, or the like, and may also be referred to as a user. For example, the station may be a mobile phone, a tablet computer, a set-top box, a smart television, a smart wearable device, a vehicle-mounted communication device, or a computer that supports a Wi-Fi communication function, and the like.

The station in this application may alternatively be a device that supports the 802.11bn standard. Certainly, the station may also support multiple WLAN standards of the 802.11 family, for example, 802.11be, 802.11bf, 802.11ax, 802.11ac, 802.11n, 802.11g, 802.11b, 802.11ad, 802.11ay, 802.11a, and the like. The station may further support UWB or sensing-related protocols.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops, and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, augmented reality (augmented reality, AR), virtual reality (virtual reality, VR), or another wearable device), a smart device in smart office (for example, a printer, a projector, a loudspeaker, or a stereo), an internet of vehicle device in the internet of vehicle, infrastructure (for example, a vending machine, a self-service navigation station of a supermarket, a self-service cash register device, or a self-service ordering machine) in daily life scenarios, a device in a large sports and music venue, or the like. Specific forms of the station and the access point are not limited in embodiments of this application, and are merely examples for description herein.

It should be understood that the 802.11 standard focuses on a physical layer (physical layer, PHY) and a medium access control (medium access control, MAC) layer. In an example, FIG. 2A is a diagram of a structure of an access point according to an embodiment of this application. The AP may be multi-antenna/multi-radio frequency, or may be single-antenna/single-radio frequency. The antenna/radio frequency is used to send/receive a physical layer protocol data unit (physical layer protocol data unit, PPDU). In an implementation, an antenna part or a radio frequency part of the AP may be separated from a main body part of the AP, that is, may be remotely arranged. In FIG. 2A, the AP may include a physical layer processing circuit and a media access control processing circuit. The physical layer processing circuit may be configured to process a physical layer signal, and the MAC layer processing circuit may be configured to process a MAC layer signal. For another example, FIG. 2B is a diagram of a structure of a station according to an embodiment of this application. FIG. 2B is a diagram of a structure of a single-antenna/single-radio frequency STA. In an actual scenario, the STA may alternatively be multi-antenna/multi-radio frequency, and may be a device with at least two antennas. The antenna/radio frequency is used to send/receive a data packet. In an implementation, an antenna part or a radio frequency part of the STA may be separated from a main body part of the STA, that is, may be remotely arranged. In FIG. 2B, the STA may include a PHY processing circuit and a MAC processing circuit. The physical layer processing circuit may be configured to process a physical layer signal, and the MAC layer processing circuit may be configured to process a MAC layer signal.

In some embodiments, in the wireless communication system shown in FIG. 1, the AP may be replaced with an access point multi-link device (AP multi-link device, AP MLD), and the STA may be replaced with a non-access point multi-link device (non-AP multi-link device, non-AP MLD). That is, the technical solutions provided in embodiments of this application may also be applied to a scenario in which a multi-link device (multi-link device, MLD) communicates with a multi-link device. The multi-link device is a wireless communication device that supports parallel transmission on a plurality of links. Compared with a device that supports only single-link transmission, the multi-link device has higher transmission efficiency and a higher throughput. The multi-link device includes one or more affiliated stations STAs (affiliated STAs). The affiliated STA is a logic station and may operate on one link. The affiliated station may be an access point (AP) or a non-access point station (non-AP STA). A multi-link device whose affiliated station is an AP may be referred to as an AP MLD, and a multi-link device whose affiliated station is a non-AP STA may be referred to as a non-AP MLD.

In a possible implementation, the multi-link device (which may be a non-AP MLD or an AP MLD herein) in embodiments of this application is an apparatus having a wireless communication function. The apparatus may be an integrated device, or may be a chip, a processing system, or the like installed in the integrated device. A device in which the chip or processing system is installed may implement methods and functions in embodiments of this application under control of the chip or processing system.

Although embodiments of this application are mainly described by using an example in which a network in which Institute of Electrical and Electronics Engineers (institute of electrical and electronics engineers, IEEE) 802.11 is deployed, a person skilled in the art easily understands that various aspects of this application may be extended to another network using various standards or protocols, for example, a personal local area network (personal area network, PAN), Bluetooth (BLUETOOTH), a high performance radio LAN (high performance radio LAN, HIPERLAN) (a wireless standard similar to the IEEE 802.11 standard, mainly used in Europe), a wide area network (wide area network, WAN), or another network known or developed in the future. Therefore, regardless of used coverage and a used wireless access protocol, various aspects provided in this application are applicable to any appropriate wireless network.

The following briefly describes some terms or nouns in this application.

### 1. Tone plan (tone plan) based on a resource unit (resource unit, RU)

So far, wireless local area network (WLAN) has been developed for many generations, including 802.11a/b/g, 802.11n, 802.11ac, 802.11ax, 802.11be, and 802.11bn currently under discussion. 802.11n is also referred to as High Throughput (high throughput, HT), 802.11ac is also referred to as Very High Throughput (very high throughput, VHT), 802.11ax is also referred to as High Efficiency (high efficiency, HE), 802.11be is also referred to as Extremely High Throughput (extremely high throughput, EHT), and 802.11bn is also referred to as Ultra High Reliability (Ultra High Reliability, UHR). In terms of bandwidth, in 802.11ax, the following bandwidth configurations are currently supported: 20 MHz, 40 MHz, 80 MHz, 160 MHz, and 80 MHz+80 MHz. A difference between 160 MHz and 80 MHz+80 MHz lies in that the former is a contiguous frequency band, whereas the latter includes two 80 MHz bands that may be non-contiguous. In 802.11be, only contiguous frequency bands are supported, including bandwidths of 20 MHz, 40 MHz, 80 MHz, 160 MHz, and 320 MHz.

In 802.11ax and 802.11be, an orthogonal frequency division multiplexing access (orthogonal frequency division multiplexing access, OFDMA) transmission mode is defined, to improve spectrum utilization. In the OFDMA transmission mode, some contiguous subcarriers in a bandwidth may be grouped into one resource unit (resource unit, RU). For example, in 802.11ax and 802.11be, nine 26-tone RUs are defined in a 20 MHz bandwidth, each 26-tone RU has 26 contiguous subcarriers, and one 26-tone RU may be allocated to one user for usage. This mode can improve a quantity of users accessing. For ease of description, this application mainly describes a tone plan (Tone Plan) currently defined in the 802.11be standard. The following separately describes tone planes and RU plans at different bandwidths.

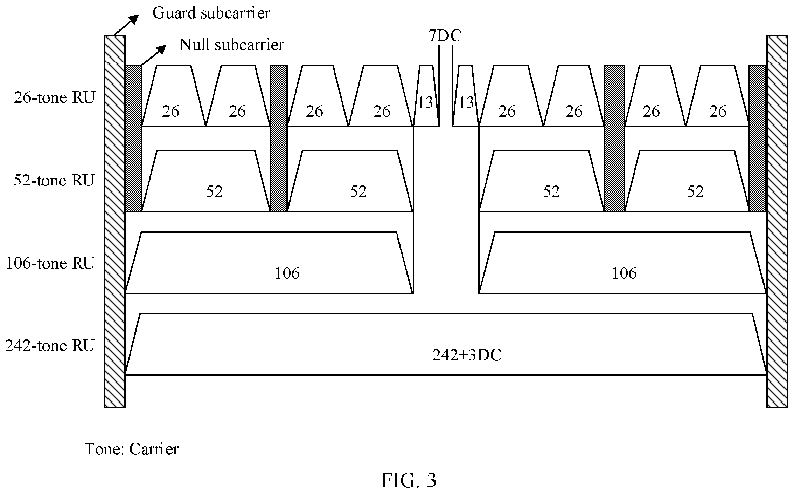

FIG. 3 is a diagram of a tone plan and an RU plan at 20 MHz according to an embodiment of this application. As shown in FIG. 3, when a bandwidth is 20 MHz, the entire bandwidth (that is, 20 MHz) may include one 242-tone RU, or include various combinations of a 26-tone RU, a 52-tone RU, and a 106-tone RU. Each RU includes a data subcarrier and a pilot subcarrier, the data subcarrier may be used to carry data information, and the pilot subcarrier may be used to estimate a phase offset and/or a frequency offset. In addition to the RU, the 20 MHz bandwidth further includes some guard (guard) subcarriers, null subcarriers, and/or direct current (direct current, DC) subcarriers.

It may be understood that the 242-tone RU may be understood as an RU including 242 subcarriers. Similarly, the 26-tone RU may be understood as an RU including 26 subcarriers, the 52-tone RU may be understood as an RU including 52 subcarriers, and the 106-tone RU may be understood as an RU including 106 subcarriers.

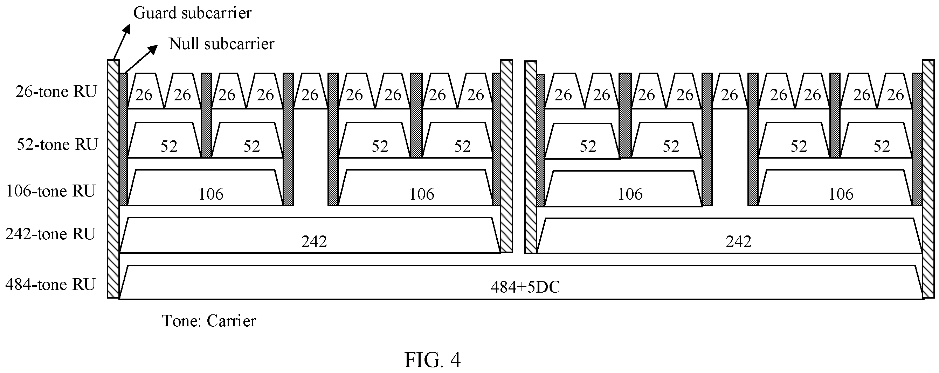

FIG. 4 is a diagram of a tone plan and an RU plan at 40 MHz according to an embodiment of this application. As shown in FIG. 4, when a bandwidth is 40 MHz, the entire bandwidth (that is, 40 MHz) may include one 484-tone RU, or include various combinations of a 26-tone RU, a 52-tone RU, a 106-tone RU, and a 242-tone RU. The 484-tone RU may be understood as an RU including 484 subcarriers.

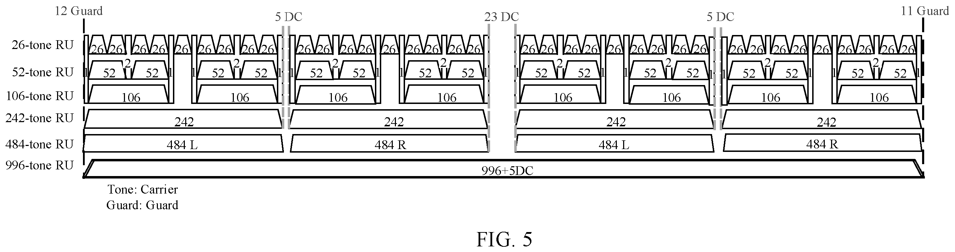

FIG. 5 is a diagram of a tone plan and an RU plan at 80 MHz according to an embodiment of this application. As shown in FIG. 5, when a bandwidth is 80 MHz, the entire bandwidth (that is, 80 MHz) may include one 996-tone RU, or include various combinations of a 26-tone RU, a 52-tone RU, a 106-tone RU, a 242-tone RU, and a 484-tone RU. The 996-tone RU may be understood as an RU including 996 subcarriers. As shown in FIG. 5, 484 L in FIG. 5 represents a left half part of a 484-tone RU (that is, a subcarrier range [-500: -17] or a subcarrier range [17: 500]), 484 R in FIG. 5 represents a right half part of the 484-tone RU, and 484 L and 484 R each include 242 subcarriers, and are another representation of 484+5DC. The 996-tone RU may be understood as an RU including 996 subcarriers. The "left" and "right" herein mean only a relative relationship relative to a central location in frequency domain. The 484-tone RU [-500: - 17] is used as an example. On an actual frequency domain resource, "484 L" is a low frequency part relative to a frequency domain center of the 484-tone RU, that is, [-500: -259], and "484 R" is a high frequency part relative to the frequency domain center of the 484-tone RU, that is, [-258: -17]. Similarly, the 484-tone RU [17: 500] is used as an example. "484 L" is [17: 258], and "484 R" is [259: 500].

It may be understood that in this application, [a: b] may refer to all integers from x to y (a and b are also integers), that is, a, (a+1), (a+2), (a+3), ..., b. Details are not described below. For example, [259: 500] refers to 259, 260, 261, 262, ..., 498, 499, 500.

When a bandwidth is 160 MHz, the entire bandwidth (that is, 160 MHz) may be understood as a replication of two 80 MHz tone plans. The entire bandwidth (that is, 160 MHz) may include two 996-tone RUs or various combinations of a 26-tone RU, a 52-tone RU, a 106-tone RU, a 242-tone RU, a 484-tone RU, and a 996-tone RU. When a bandwidth is 320 MHz, the entire bandwidth (that is, 320 MHz) may be understood as a replication of four 80 MHz tone plans. Details are not described herein again.

In the foregoing tone plans shown in FIG. 3 to FIG. 5, a 242-tone RU is used as a unit. Assuming that a leftmost RU in FIG. 3 to FIG. 5 is at a lowest frequency, and a rightmost RU in FIG. 3 to FIG. 5 is at a highest frequency. From left to right, 242-tone RUs may be numbered as follows: 1^{st} (1st), 2^{nd} (2nd), ..., and 16^{th} (16th). It may be understood that, a 320 MHz bandwidth is used as an example, a data (Data) field in a radio frame occupies at most 16 242-tone RUs. That is, in the data field, at most 16 242-tone RUs are in one-to-one correspondence with 16 20-MHz channels in ascending order of frequencies.

In terms of bandwidth, a 26-tone RU approximately corresponds to 2 MHz, a 52-tone RU approximately corresponds to 4 MHz, a 106-tone RU approximately corresponds to 8 MHz, and a 242-tone RU approximately corresponds to 20 MHz. A bandwidth corresponding to an RU of another size (size) may be correspondingly deduced through addition or multiplication. Details are not described herein again.

It may be understood that, because the 802.11be standard allows a plurality of RUs to be allocated to one STA, that is, a plurality of RUs are combined and allocated to one STA, the 802.11be standard supports a multiple resource unit (multiple RU, MRU). In other words, in the 802.11be standard, in addition to the several RUs mentioned above, some MRUs are further introduced. For example, one 52-tone RU and one 26-tone RU may form a 52+26-tone MRU, and one 106-tone RU and one 26-tone RU may form a 106+26-tone MRU. For another example, one 484-tone RU and one 242-tone RU may form a 484+242-tone MRU, and one 996-tone RU and one 484-tone RU may form a 996+484-tone MRU. For another example, one 996-tone RU, one 484-tone RU, and one 242-tone RU may form a 996+484+242-tone MRU, two 996-tone RUs and one 484-tone RU may form a 2×996+484-tone MRU, three 996-tone RUs may form a 3×996-tone MRU, three 996-tone RUs and one 484-tone RU may form a 3×996+484-tone MRU, and the like. It may be understood that, with continuous evolution and development of communication technologies, a next-generation standard of 802.11be may support more RU or MRU formats. This is not limited in this application.

### 2. Uplink multi-user transmission

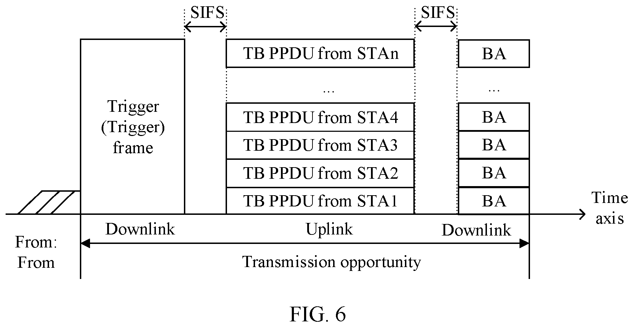

Uplink multi-user transmission is an important technology. FIG. 6 is a schematic flowchart of uplink multi-user transmission according to an embodiment of this application. As shown in FIG. 6, a procedure of uplink multi-user transmission may include: an AP sends a trigger frame to trigger uplink multi-user transmission, where the trigger frame carries identifier information and resource allocation information of one or more stations; and after receiving the trigger frame, each station sends an uplink data frame on an allocated resource unit (RU) by using a trigger-based physical layer protocol data unit (trigger-based physical layer protocol data unit, TB PPDU), and receives an acknowledgment (block acknowledge, BA) frame sent by the AP after a short inter-frame space (short inter-frame space, SIFS).

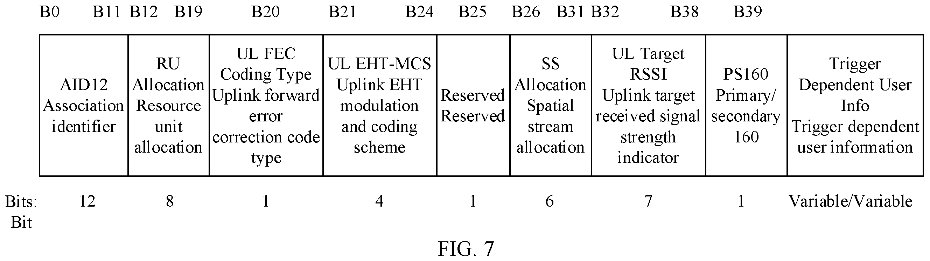

In a possible implementation, the trigger frame may include but is not limited to a common information field and a user information list field. The common information field may include common information that all STAs scheduled by the trigger frame need to read. In 802.11be, the user information list field of the trigger frame may include but is not limited to one or more EHT variant user information fields (EHT variant User Info field). An EHT variant user information field may include information that an EHT STA needs to read. FIG. 7 is a diagram of a frame format of an EHT variant user information field according to an embodiment of this application. As shown in FIG. 7, the EHT variant user information field includes but is not limited to a resource unit allocation subfield (RU Allocation subfield) and a primary/secondary 160 subfield (PS160 subfield). The RU Allocation subfield and the PS160 subfield may be used to jointly indicate (a size and a location of) an RU or an MRU. For example, a B0 bit in the RU allocation subfield, B7 to B1 bits in the RU allocation subfield, the PS160 subfield, and a mapping relationship between the RU and the MRU are shown in the following Table 1. Table 1 shows an interpretation of an RU allocation subfield and a PS160 subfield in an 802.11be trigger frame.

**Table 1**

| **PS160 subfield (PS160 subfield)** | **B0 of the RU Allocation subfield (B0 of the resource unit allocation subfield)** | **B7-B1 of the RU Allocation subfield (B7 to B1 of the resource unit allocation subfield)** | **Bandwidth (MHz) (Bandwidth)** | **RU/ MRU size (RU or MRU size)** | **RU/MRU index (RU or MRU index)** | **PHY RU/MRU index (Physical RU or MRU index)** |
|---|---|---|---|---|---|---|
| 0 to 3: | | 0 to 8 | 20, 40, 80, 160, or 320 | 26 | RU1 to RU9, respectively (respectivel y/in sequence/se quentially) | 37×N+ RU index |
| (indicating 80 MHz at which the RU is located) | | | | | | |
| | | 9 to 17 | 40, 80, 160, or 320 | | RU10 to RU18, respectively | |
| | | 18 | 80, 160, or 320 | | Reserved (reserved) | |
| | | 19 to 36 | 80, 160, or 320 | | RU20 to RU37, respectively | |
| | | 37 to 40 | 20, 40, 80, 160, or 320 | 52 | RU1 to RU4, respectively | 16×N+ RU index |
| | | 41 to 44 | 40, 80, 160, or 320 | | RU5 to RU8, respectively | |
| | | 45 to 52 | 80, 160, or 320 | | RU9 to RU16, respectively | |
| | | 53, 54 | 20, 40, 80, 160, or 320 | 106 | RU1 and RU2, respectively | 8×N+ RU index |
| | | 55, 56 | 40, 80, 160, or 320 | | RU3 and RU4, respectively | |
| | | 57 to 60 | 80, 160, or 320 | | RU5 to RU8, respectively | |
| | | 61 | 20, 40, 80, 160, or 320 | 242 | RU1 | 4×N+ RU index |
| | | 62 | 40, 80, 160, or 320 | | RU2 | |
| | | 63, 64 | 80, 160, or 320 | | RU3 and RU4, respectively | |
| | | 65 | 40, 80, 160, or 320 | 484 | RU1 | 2×N+ RU index |
| | | 66 | 80, 160, or 320 | | RU2 | |
| | | 67 | 80, 160, or 320 | 996 | RU1 | N+RU index |
| 0 to 1: | 0 | 68 | Reserved (reserved) | | | Reserved (reserved) |
| (indicating 160 MHz at which the RU is located) | | | | | | |
| | 1 | | 160 or 320 | 2×99 6 | RU1 | X1+RU index |
| 0 | 0 | 69 | Reserved (reserved) | | | Reserved (reserved) |
| 0 | 1 | | | | | |
| 1 | 0 | | | | | |
| 1 | 1 | | 320 | 4×99 6 | RU1 | RU1 |
| 0 to 3: | | 70 to 72 | 20, 40, 80, 160, or 320 | 52+2 6 | MRU1 to MRU3, respectively | 12×N+M RU index |
| indicating 80 MHz at which the MRU is located | | | | | | |
| | | 73 to 75 | 40, 80, 160, or 320 | 52+2 6 | MRU4 to MRU6, respectively | |
| | | 76 to 81 | 80, 160, or 320 | 52+2 6 | MRU7 to MRU12, respectively | |
| | | 82, 83 | 20, 40, 80, 160, or 320 | 106+ 26 | MRU1 and MRU2, respectively | 8×N+ MRU index |
| | | 84, 85 | 40, 80, 160, or 320 | 106+ 26 | MRU3 and MRU4, respectively | |
| | | 86 to 89 | 80, 160, or 320 | 106+ 26 | MRU5 to MRU8, respectively | |
| | | 90 to 93 | 80, 160, or 320 | 484+ 242 | MRU1 to MRU4, respectively | 4×N+ MRU index |
| 0 to 1: | 0 | 94, 95 | 160 or 320 | 996+ 484 | MRU1 and MRU2, respectively | 4×X1+M RU index |
| indicating 160 MHz at which the MRU is located | | | | | | |
| | 1 | | | | MRU3 and MRU4, respectively | |
| 0 to 1: | 0 | 96 to 99 | 160 or 320 | 996+ 484+ 242 | MRU1 to MRU4, respectively | 8×X1+ MRU index |
| indicating 160 MHz at which the MRU is located | | | | | | |
| | 1 | | | | MRU5 to MRU8, respectively | |
| 0 | 0 | 100 to 103 | 320 | 2×99 6 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×99 6 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×99 6 +484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107 to 127 | Any (any) | Reserved | Reserved | Reserved |
| Note: In primary 160 MHz, B0 of the RU Allocation subfield is set to 0 to indicate that RU/MRU allocation is applied to primary 80 MHz, and B0 of the RU Allocation subfield is set to 1 to indicate that RU/MRU allocation is applied to secondary 80 MHz. In secondary 160 MHz, B0 of the RU Allocation subfield is set to 0 to indicate that RU/MRU allocation is applied to lower-frequency 80 MHz, and B0 of the RU/MRU allocation is set to 1 to indicate that RU/MRU allocation is applied to higher-frequency 80 MHz. | | | | | | |

In a possible implementation, N in Table 1 may be obtained by using a formula N=2*X1+X0. For values of X1 and X0, refer to the following Table 2. Table 2 shows a lookup table for X1 and N (Lookup table for X1 and N).

**Table 2**

| **Bandwidth (MHz)** | **Input (Inputs)** | | | **Output (outputs)** | | |
|---|---|---|---|---|---|---|
| | **Configuration (Configuration)** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

It may be understood that in Table 2, P80 represents a primary 80 MHz channel, S80 represents a secondary 80 MHz channel, and S160 represents a secondary 160 MHz channel.

The configuration in Table 2 refers to a sequence of P80, S80, and S160 in absolute frequencies, and the sequence from left to right represents frequencies from low to high. For example, [P80 S80] indicates that the primary 80 MHz channel is a 1^{st} 80 MHz channel in ascending order of frequencies, and the secondary 80 MHz channel is a 2^{nd} 80 MHz channel in ascending order of frequencies. In other words, [P80 S80] indicates that the primary 80 MHz channel is a low 80 MHz channel, and the secondary 80 MHz channel is a high 80 MHz channel. For another example, [S80 P80 S160] indicates that the secondary 80 MHz channel is a low 80 MHz channel in a low 160 MHz channel, the primary 80 MHz channel is a high 80 MHz channel in the low 160 MHz channel, and the secondary 160 MHz channel is a high 160 MHz channel.

### 3. Distributed resource unit (distributed resource unit, dRU)

Both the European Telecommunications Standards Institute (ETSI) and the Federal Communications Commission of the United States have issued regulations on a 6 GHz spectrum, which limit a maximum transmit power and a maximum power spectral density. Compared with that of the maximum power, a limit of the maximum power spectral density is stricter, and an allowed maximum transmit power is generally more limited by a power spectral density (power spectral density, PSD). Due to the limitation of the maximum power spectral density, a transmit power of a single contiguous RU is limited. It should be understood that the contiguous RU in this application is an RU including a plurality of contiguous subcarriers, or the contiguous RU is an RU including two contiguous subcarrier groups, a plurality of subcarriers included in each contiguous subcarrier group are contiguous, and the two contiguous subcarrier groups are spaced apart only by a guard subcarrier, a null subcarrier, or a direct current subcarrier. Certainly, the contiguous RU may also have another name, for example, a regular RU (regular RU, rRU). The "contiguous RU" and the "regular RU" may be used interchangeably. A name of the contiguous RU is not limited in this application.

The maximum power spectral density refers to a maximum transmit power in 1 MHz, or the maximum power spectral density is expressed in a form in which the transmit power within 1 MHz does not exceed x dBm (dBm=10lg(mW), where lg represents a base-10 logarithm). A minimum granularity of the maximum power spectral density is 1 MHz. Therefore, the distributed RU technology is proposed to increase the transmit power without changing the transmit power in 1 MHz, that is, without changing the power spectral density. The distributed RU corresponds to the contiguous RU. The distributed RU includes a plurality of subcarriers that are discrete in frequency domain. The plurality of discrete subcarriers may be partially discrete or fully discrete. In other words, the plurality of discrete subcarriers may include a part of contiguous subcarriers in frequency and a part of non-contiguous subcarriers in frequency, or the plurality of discrete subcarriers may be fully non-contiguous in frequency. It should be understood that the "distributed RU" and the "dRU" in this specification may be used interchangeably. It should be further understood that the distributed RU mentioned in this specification is an RU whose subcarriers are discrete in frequency domain, that is, an RU having this feature is referred to as a distributed RU in this specification. However, in practice, an RU having this feature may have another name. This is not limited in this application.

For a dRU and a contiguous RU (or an rRU) that include a same quantity of subcarriers, a bandwidth spanned by the dRU from a low-frequency start location to a high-frequency end location in frequency domain is greater than a frequency domain bandwidth occupied by the contiguous RU. In this way, when the maximum power spectral density is the same, a total transmit power of the dRU may be higher than a total transmit power of the contiguous RU. In other words, when the power spectral density is limited, a limited quantity of subcarriers (for example, 26 subcarriers included in a contiguous 26-tone RU) are spread across a wider bandwidth, that is, across more subcarriers (for example, odd-numbered subcarriers of two contiguous 26-tone RUs), to increase transmit power. Therefore, compared with a contiguous RU, when a dRU is used for data transmission, a transmit power on each subcarrier can be increased, a total transmit power can be increased, and a signal-to-noise ratio (signal-to-noise ratio, SNR) can be increased.

In this embodiment of this application, it may be understood that, in one sending process of a user (for example, a STA), each subcarrier in a resource unit allocated to the STA has a same transmit power. An example in which a carrier spacing is 78.125 kHz is used, 1 MHz includes 12.8 (1000/78.125=12.8, approximately 13) subcarriers. Assuming that a transmit power in 1 MHz does not exceed p mW (that is, the maximum power spectral density). A maximum value of a quantity of subcarriers that carry a signal in any 13 contiguous subcarriers determines an average power of each subcarrier, and further determines a transmit power of the signal. The transmit power of the signal is equal to a product of the average power of each subcarrier and the quantity of subcarriers. For example, assuming that a maximum of five subcarriers in any 13 contiguous subcarriers (1 MHz) carry a signal, an average power of each subcarrier in a 1 MHz bandwidth is (p/5) mW. Assuming that a maximum of two subcarriers in any 13 contiguous subcarriers (1 MHz) carry a signal, an average power of each subcarrier in the 1 MHz bandwidth is (p/2) mW. In other words, when the maximum power spectral density is fixed, a larger quantity of subcarriers that carry a signal in any 13 contiguous subcarriers indicates a smaller average power on each subcarrier and a smaller total transmit power. It can be learned that, assuming that a resource unit allocated to the STA is a 26-tone dRU, that is, a quantity of subcarriers carrying a signal is 26. If a maximum of two subcarriers in any 13 contiguous subcarriers of the tone plan carry a signal, for example, a size of a bandwidth occupied by the 26-tone dRU is 26/2=13 MHz, an average power of each subcarrier in the 1 MHz bandwidth is (p/2) mW, and a total transmit power of the 26-tone dRU may be calculated based on a total transmit power of the subcarriers, which is specifically (p/2)*26 mW, or is calculated based on a bandwidth occupied by the subcarriers, which is specifically 13*p mW. If the resource unit allocated to the STA is a contiguous 26-tone RU, because the contiguous 26-tone includes 26 contiguous subcarriers (two groups of 13 contiguous subcarriers), that is, a size of a bandwidth occupied by the contiguous 26-tone RU is 2 MHz, an average power of each subcarrier in the 1 MHz bandwidth is (p/13) mW, and a total transmit power of the contiguous 26-tone RU may be calculated based on a total transmit power of the subcarriers, which is specifically (p/13)*26 mW, or is calculated based on a bandwidth occupied by the subcarriers, which is specifically 2*p mW. In contrast, under a same maximum power spectral density, the total transmit power of the 26-tone dRU is 6.5 times higher than the total transmit power of the contiguous 26-tone RU. The symbol "*" in this specification may represent "multiply" or "multiplied by". Details are not described below.

In an implementation, the dRU may be designed based on an equal subcarrier spacing. For example, the subcarrier spacing of a 26-tone dRU in a 20 MHz bandwidth is 9, the subcarrier spacing of a 26-tone dRU in a 40 MHz bandwidth is 18, and the subcarrier spacing of a 26-tone dRU in an 80 MHz bandwidth is 36. In the conventional technology, eight 52-tone dRUs are constructed in a 40 MHz bandwidth, and 16 52-tone dRUs and eight 106-tone dRUs are constructed in an 80 MHz bandwidth. Because the subcarrier spacing of a 26-tone dRU in the 40 MHz bandwidth is 18, and the subcarrier spacing of a corresponding 52-tone dRU is 9, nine 52-tone dRUs can theoretically be constructed at the 40 MHz bandwidth. Similarly, because the subcarrier spacing of the 26-tone dRU in the 80 MHz bandwidth is 36, the subcarrier spacing of a corresponding 52-tone dRU is 18, and the subcarrier spacing of the 106-tone dRU is 9, 18 52-tone dRUs and nine 106-tone dRUs can theoretically be constructed at the 80 MHz bandwidth. In other words, in the conventional technology, one 52-tone dRU is wasted at the 40 MHz bandwidth, and two 52-tone dRUs and one 106-tone dRU are wasted at the 80 MHz bandwidth.

In addition, when dRU resource allocation is performed based on an indication of an RU or an MRU in 802.11be, a maximum of eight 52-tone dRUs may be indicated at the 40 MHz bandwidth, and a maximum of 16 52-tone dRUs and eight 106-tone dRUs may be indicated at the 80 MHz bandwidth. Therefore, if 40 MHz/80 MHz includes more dRUs, how to use these dRUs (for example, use a 9^{th} 52-tone dRU in the 40 MHz bandwidth, or use a 17^{th} or 18^{th} 52-tone dRU at the 80 MHz bandwidth, or use a 9^{th} 106-tone dRU at the 80 MHz bandwidth) for transmission to improve spectrum utilization becomes an urgent problem to be resolved.

This application provides a dRU tone plan (tone plan) design. The dRU tone plan may be applied to uplink and/or downlink transmission. The dRU tone plan at the 40 MHz bandwidth may include nine 52-tone dRUs. The dRU tone plan at the 80 MHz bandwidth may include 18 52-tone dRUs or nine 106-tone dRUs. The dRU tone plan at the 160 MHz bandwidth may include 36 52-tone dRUs or 18 106-tone dRUs. This application provides a communication method and apparatus based on a distributed resource unit, so that spectrum utilization can be improved by using a dRU in a 40 MHz/80 MHz/160 MHz dRU tone plan for transmission.

This application further provides another communication method and apparatus based on a distributed resource unit. An existing RU/MRU indication manner is reused, and an additional entry is added to indicate more dRUs, so that a station can perform uplink communication by using more dRUs, thereby improving spectrum utilization of uplink transmission.

In a possible implementation, a 26-tone dRU in this application may be understood as a dRU including 26 subcarriers. Similarly, a 52-tone dRU may be understood as a dRU including 52 subcarriers, a 106-tone dRU may be understood as a dRU including 106 subcarriers, a 242-tone dRU may be understood as a dRU including 242 subcarriers, a 484-tone dRU may be understood as a dRU including 484 subcarriers, and a 996-tone dRU may be understood as a dRU including 996 subcarriers. Details are not described below.

A dRU in this application includes a plurality of subcarriers that are discrete in frequency domain. The plurality of discrete subcarriers may be partially discrete or fully discrete. In other words, the plurality of discrete subcarriers may include a part of contiguous subcarriers in frequency and a part of non-contiguous subcarriers in frequency, or the plurality of discrete subcarriers may be fully non-contiguous in frequency.

The communication apparatus in this application may support 802.11 series protocols, for example, an 802.11bn standard, or a next-generation standard of 802.11bn. Certainly, the communication apparatus in this application may also support multiple WLAN standards of the 802.11 family, for example, 802.11be, 802.11bf, 802.11ax, 802.11ac, 802.11n, 802.11g, 802.11b, 802.11ad, 802.11ay, 802.11a, and the like. The communication apparatus in this application may further support another standard protocol, for example, a sensing or ranging standard, which is not listed one by one herein.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application do not constitute a limitation on the protection scope of this application.

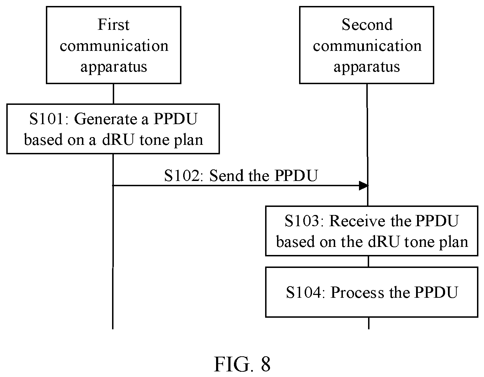

FIG. 8 is a schematic flowchart of a communication method based on a distributed resource unit according to an embodiment of this application. A first communication apparatus in the method may be the AP or the STA in FIG. 1, and correspondingly, a second communication apparatus may be the STA or the AP in FIG. 1. Certainly, the first communication apparatus in the method may alternatively be an AP MLD or a non-AP MLD, and correspondingly, the second communication apparatus may be a non-AP MLD or an AP MLD. This is not limited in this embodiment of this application.

As shown in FIG. 8, the communication method based on a distributed resource unit includes but is not limited to the following steps.

S101: The first communication apparatus generates a PPDU based on a dRU tone plan.

S102: The first communication apparatus sends the PPDU.

S103: The second communication apparatus receives the PPDU based on the dRU tone plan.

S104: The second communication apparatus processes the PPDU.

In a possible implementation, when a bandwidth (or a distribution bandwidth) is 40 MHz, the dRU tone plan may include nine 52-tone dRUs, or 18 26-tone dRUs, or four 106-tone dRUs, or two 242-tone dRUs, or one 484-tone dRU, or various combinations of a 26-tone dRU, a 52-tone dRU, a 106-tone dRU, and a 242-tone dRU. When the bandwidth (or the distribution bandwidth) is 80 MHz, the dRU tone plan may include 18 52-tone dRUs, or nine 106-tone dRUs, or 36 26-tone dRUs (or 37 26-tone dRUs), or four 242-tone dRUs, or two 484-tone dRUs, or one 996-tone dRU, or various combinations of a 26-tone dRU, a 52-tone dRU, a 106-tone dRU, a 242-tone dRU, and a 484-tone dRU. When the bandwidth (or the distribution bandwidth) is 160 MHz, the dRU tone plan may include 36 52-tone dRUs, or 18 106-tone dRUs, or 74 26-tone dRUs, or eight 242-tone dRUs, or four 484-tone dRUs, or two 996-tone dRUs, or one 2×996-tone dRU, or various combinations of a 26-tone dRU, a 52-tone dRU, a 106-tone dRU, a 242-tone dRU, a 484-tone dRU, and a 996-tone dRU. For content of dRU tone plans at different bandwidths, refer to the following descriptions. The distribution bandwidth may represent a bandwidth in which subcarriers of dRUs are distributed. The distribution bandwidth is less than or equal to a PPDU bandwidth (which may be a transmission bandwidth herein).

In a possible implementation, the first communication apparatus may generate a PPDU based on a dRU tone plan (dRU tone plan) for a bandwidth/distribution bandwidth (for example, 40 MHz, 80 MHz, or 160 MHz), and send the PPDU. It may be understood that a dRU tone plan at a bandwidth includes a plurality of dRUs. The first communication apparatus may generate and send the PPDU based on one or more dRUs in the dRU tone plan at the bandwidth. In other words, in actual application, when the first communication apparatus generates and sends the PPDU, only some (for example, one or more) dRUs in the dRU tone plan may be used, and other dRUs in the dRU tone plan are not used. In other words, the PPDU generated and/or sent by the first communication apparatus does not carry information on some subcarriers in the transmission bandwidth of the PPDU.

In a possible implementation, when the first communication apparatus is an AP or an AP MLD, and the second communication apparatus is a STA or a non-AP MLD, the first communication apparatus may determine, based on a 40 MHz/80 MHz/160 MHz dRU tone plan, a dRU used by the first communication apparatus, and may carry information (for example, a size and/or a location) about the dRU used by the first communication apparatus in a signaling (signal, SIG) field of the PPDU. The dRU may be one or more dRUs in the 40 MHz/80 MHz/160 MHz dRU tone plan. Correspondingly, after receiving (or parsing) the SIG field of the PPDU, the second communication apparatus may receive another part (for example, data (data)) of the PPDU on the dRU. In other words, the second communication apparatus may receive the PPDU on a dRU of the 40 MHz/80 MHz/160 MHz dRU tone plan.

In a possible implementation, when the first communication apparatus is a STA or a non-AP MLD, and the second communication apparatus is an AP or an AP MLD, the second communication apparatus may send a frame used for triggering. The frame used for triggering includes indication information, and the indication information indicates a dRU allocated to the first communication apparatus. The dRU allocated to the first communication apparatus is one or more dRUs in the dRU tone plan (dRU tone plan). After receiving the frame used for triggering, the first communication apparatus may determine, based on the indication information in the frame used for triggering, the dRU allocated to the first communication apparatus, and may generate and send a PPDU based on the dRU and the dRU tone plan. The second communication apparatus may receive the PPDU from the first communication apparatus based on the dRU allocated to the first communication apparatus and the dRU tone plan, and process the PPDU.

It may be understood that there may be one or more first communication apparatuses (for example, stations (STAs)), and the second communication apparatus (for example, an AP) may allocate a corresponding dRU to each of the one or more first communication apparatuses (for example, STAs). For example, the second communication apparatus (for example, an AP) may determine, based on a dRU tone plan (dRU tone plan), dRUs allocated to the one or more first communication apparatuses (for example, STAs). A specific determining manner may be an internal policy of the second communication apparatus (for example, an AP). This is not limited in this embodiment of this application. The second communication apparatus (for example, an AP) sends a trigger frame, to trigger uplink multi-user transmission. The trigger frame includes one or more pieces of indication information. One piece of indication information indicates a dRU allocated to one first communication apparatus (for example, a STA). dRUs allocated to different first communication apparatuses (for example, STAs) may be different and do not conflict with each other (for example, different dRUs of a same size (size), or dRUs of different sizes that do not conflict with each other). In other words, the dRUs allocated by the second communication apparatus (for example, an AP) to a plurality of first communication apparatuses (for example, STAs) may be different dRUs of a same size (size), or dRUs of different sizes (size) that do not conflict with each other. In other words, the second communication apparatus (for example, an AP) may simultaneously schedule dRUs of different sizes that do not conflict with each other. For example, the second communication apparatus may allocate dRUs to two first communication apparatuses by using one trigger frame. The dRU allocated to one first communication apparatus is a 1^{st} 52-tone dRU, and the dRU allocated to the other first communication apparatus is a 3^{rd} 106-tone dRU.

Correspondingly, the second communication apparatus (for example, an AP) schedules each first communication apparatus (for example, a STA) for uplink multi-user transmission to receive the trigger frame. For ease of description, in this application, one first communication apparatus (for example, a STA) is used as an example for description. The first communication apparatus (for example, an STA) determines, based on the indication information in the trigger frame, a dRU allocated to the first communication apparatus, and may send a PPDU (for example, send a trigger-based PPDU (trigger-based PPDU, TB PPDU)) by using the dRU allocated to the first communication apparatus.

It may be further understood that, because the second communication apparatus (for example, an AP) may simultaneously schedule a plurality of first communication apparatuses (for example, STAs) to perform uplink transmission, the second communication apparatus (for example, an AP) may determine, based on a dRU allocated to each first communication apparatus (for example, a STA) and the dRU tone plan, which subcarriers carry data belonging to a same first communication apparatus (for example, an STA), so that the second communication apparatus (for example, an AP) can distinguish uplink data from different first communication apparatuses (for example, STAs).

In a possible implementation, the frame used for triggering may use various possible frame formats, and may be a type of a control frame in a MAC frame specified in a standard, which is referred to as a trigger frame (trigger frame), or may be another MAC frame with a trigger function. This is not limited in this embodiment of this application. The another MAC frame with the trigger function may also be referred to as a MAC frame with a TRS (triggered response scheduling, triggered response scheduling) function. The function is generally implemented by including a TRS Control subfield (TRS control subfield) in the MAC frame. For example, the indication information may be carried in an RU/dRU allocation (RU/dRU allocation) field of a user info field (user information field) in the trigger frame, or may be carried in an RU/dRU allocation field of a TRS Control subfield in the another MAC frame. For another example, a field (for example, a dRU allocation (dRU allocation) field) may be added to a user info field (user information field) of the trigger frame to carry the indication information. Similarly, a field (for example, a dRU allocation (dRU allocation) field) may be added to a TRS Control subfield of the another MAC frame to carry the indication information. In this case, a user info field (user information field) may include both an RU allocation field and a dRU allocation field. Therefore, more information may be required to indicate whether the RU allocation field or the dRU allocation field in the user info field is enabled.

It may be understood that a structure of the frame used for triggering is not limited in this embodiment of this application, and a manner of carrying the indication information in the frame used for triggering and a corresponding frame format are not limited.

In a possible implementation, the indication information may indicate a dRU allocated to the first communication apparatus (for example, a STA). The dRU may be determined based on a size (size) and a location. A size (size) of the dRU may refer to a quantity of subcarriers in the dRU, and a location of the dRU may refer to locations of the subcarriers in the dRU in frequency domain. Generally, a subcarrier index range (subcarrier index range) may indicate locations of subcarriers in a dRU in frequency domain. In this embodiment of this application, a size and a location of a dRU comply with a size and a location defined in the following dRU tone plan.

In a possible implementation, that the first communication apparatus sends the PPDU includes: the first communication apparatus sends data information of the PPDU on a data subcarrier of the dRU, and sends pilot information of the PPDU on a pilot subcarrier of the dRU. Specific subcarriers included in the dRU may be determined by the dRU tone plan (tone plan). For the dRU tone plan, refer to the following descriptions. Details are not described herein again.

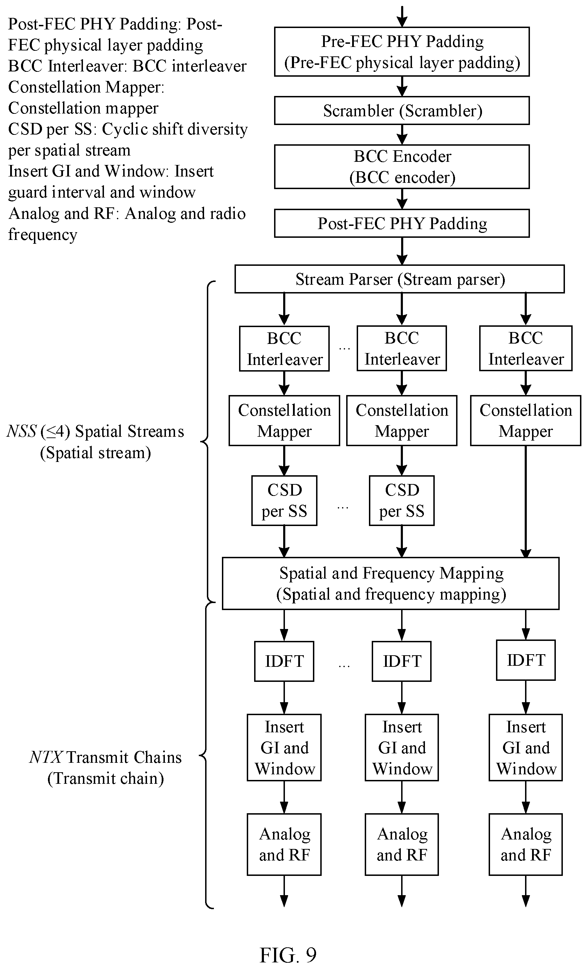

For example, dRU transmission based on binary convolutional code (binary convolutional code, BCC) coding is used as an example. A process in which the first communication apparatus sends the PPDU may be shown in FIG. 9. FIG. 9 is a block diagram of dRU transmission based on BCC coding according to an embodiment of this application. As shown in FIG. 9, after performing BCC interleaving (BCC interleaver) on a signal, a first communication apparatus may perform constellation mapping (constellation mapping). In a constellation mapping process, a frequency domain sequence of the signal may be mapped to a plurality of subcarriers of a dRU, then, subsequent processing is performed (for example, cyclic shift diversity (cyclic shift diversity, CSD), spatial and frequency mapping, inverse discrete Fourier transform (inverse discrete Fourier transform, IDFT), insertion of a guard interval (guard interval, GI) and a window, and the like are performed on each stream), and finally, the signal is sent through an analog and radio frequency (Analog and RF) operation.

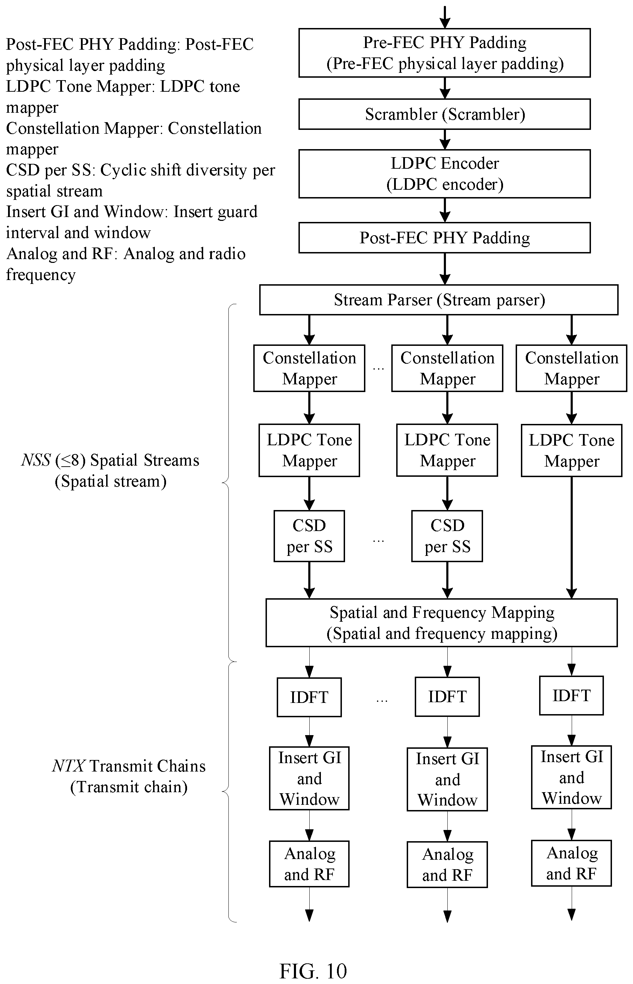

For example, dRU uplink transmission based on low-density parity-check (low-density parity check, LDPC) coding is used as an example, a process in which the first communication apparatus sends a PPDU may be shown in FIG. 10. FIG. 10 is a block diagram of dRU transmission based on LDPC coding according to an embodiment of this application. As shown in FIG. 10, after performing a stream parsing (Stream Parser) operation on a signal, a first communication apparatus performs constellation mapping for each stream. In a constellation mapping process, a frequency domain sequence of the signal may be mapped to a plurality of subcarriers of a dRU, then, subsequent processing is performed (for example, LDPC subcarrier mapping, cyclic shift diversity (CSD), spatial and frequency mapping, inverse discrete Fourier transform (IDFT), insertion of a guard interval (guard interval, GI) and a window, and the like are performed on each stream after constellation mapping), and finally, the signal is sent through an analog and radio frequency (Analog and RF) operation.

The block diagrams shown in FIG. 9 and FIG. 10 may be understood as a process of generating and sending a PPDU. It may be understood that, for a process of generating and sending a PPDU, refer to the conventional technology (for example, the existing 802.11be standard). Only a brief description is provided herein. It may be further understood that a process of receiving and processing the PPDU may be an inverse process of the process of generating and sending the PPDU. Details are not described herein.

The following describes dRU tone plans at different bandwidths provided in this embodiment of this application by using an example.

### (1) 40 MHz dRU tone plan

In 802.11be, each 40 MHz bandwidth includes eight 52-tone RUs (as shown in FIG. 4 above). By spreading the eight 52-tone RUs across the 40 MHz bandwidth, eight 52-tone dRUs can be obtained. In addition, as described above, to improve spectrum utilization, one 52-tone dRU may be additionally constructed in the 40 MHz bandwidth, that is, in this embodiment of this application, the dRU tone plan in the 40 MHz bandwidth may include nine 52-tone dRUs.

For ease of description, in this application, dRUs of different sizes (size) are numbered. For example, for the nine 52-tone dRUs in the 40 MHz dRU tone plan, if the nine 52-tone dRUs are numbered from a value 0, an index (index) of a ^{1st} 52-tone dRU is 0 (which may alternatively be represented as a 52-tone dRU 0), an index (index) of a 2^{nd} 52-tone dRU is 1 (which may alternatively be represented as a 52-tone dRU 1), and so on, an index (index) of a 9^{th} 52-tone dRU is 8 (which may alternatively be represented as a 52-tone dRU 8). If the nine 52-tone dRUs are numbered from a value 1, an index (index) of the ^{1st} 52-tone dRU is 1 (which may alternatively be represented as a 52-tone dRU 1), an index (index) of the 2^{nd} 52-tone dRU is 2 (which may alternatively be represented as a 52-tone dRU 2), and so on, an index (index) of the 9^{th} 52-tone dRU is 9 (which may alternatively be represented as a 52-tone dRU 9). Similarly, other dRUs (such as 26-tone dRUs, 106-tone dRUs, 242-tone dRUs and 484-tone dRUs) in the 40 MHz dRU tone plan may be numbered in a similar manner. Details are not described herein. Similarly, dRUs in a dRU tone plan at another bandwidth may also be numbered in a similar manner. Details are not described below.

In this embodiment of this application, an example in which index numbering starts from a value 1 is used. Details are not described below.

In a possible implementation, one 52-tone dRU in the nine 52-tone dRUs includes subcarriers of 26-tone dRUs 5 and 14 (that is, 26-tone dRUs whose indexes are 5 and 14). For example, the 52-tone dRU may be represented as a 52-tone dRU 9 (that is, a 52-tone dRU whose index is 9, or a 9^{th} 52-tone dRU). In other words, at the 40 MHz bandwidth, the 52-tone dRU 9 may include subcarriers of 26-tone dRUs 5 and 14 (that is, 26-tone dRUs whose indexes are 5 and 14, or 5^{th} and 14^{th} 26-tone dRUs). Alternatively, subcarriers included in the 52-tone dRU 9 are the same as subcarriers included in the 26-tone dRUs 5 and 14. Certainly, the 52-tone dRU (that is, a 52-tone dRU composed of subcarriers of the 26-tone dRUs 5 and 14) may alternatively be represented by using another index value. For example, the 52-tone dRU may be represented as a 52-tone dRU 3 (that is, a 52-tone dRU whose index is 3, or a 3^{rd} 52-tone dRU). This is not limited in this embodiment of this application.

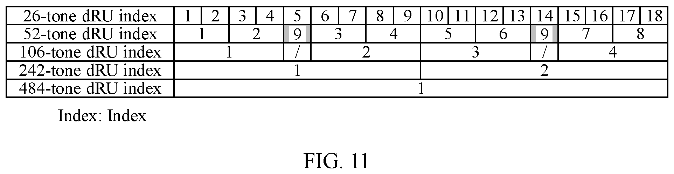

FIG. 11 is a diagram of a logical architecture of dRUs in a 40 MHz bandwidth according to an embodiment of this application. As shown in FIG. 11, the 40 MHz bandwidth may include 18 26-tone dRUs, and the 18 26-tone dRUs may construct nine 52-tone dRUs. A 52-tone dRU 9 includes subcarriers of 26-tone dRUs 5 and 14 (that is, 26-tone dRUs whose indexes are 5 and 14). It may be understood that the logical architecture of the dRUs shown in FIG. 11 is merely an example. In actual application, an index mapping relationship between dRUs of different sizes (size) may alternatively be in another form. This is not limited in this embodiment of this application.

In this embodiment of this application, "a dRU whose index is x" may be a dRU whose physical dRU index (PHY dRU index) is x. Details are not described below.

In a possible implementation, the 52-tone dRU 9 at the 40 MHz bandwidth has the following features: a quantity of data subcarriers of the 52-tone dRU 9 in 1 MHz is less than or equal to 2, and a quantity of subcarriers of the 52-tone dRU 9 in 1 MHz at which a pilot subcarrier is located is 1.

In this application, "any 1 MHz at which a subcarrier is located" may be understood as 1 MHz including the subcarrier, or 13 contiguous subcarriers including the subcarrier. Details are not described below.

For example, 18 26-tone dRUs are defined in the 40 MHz bandwidth. Subcarriers included in each of 26-tone dRUs 5 and 14 are shown in the following Table 3. Correspondingly, subcarriers included in the 52-tone dRU 9 are shown in the following Table 4.

**Table 3**

| 26-tone dRU index | Subcarrier index |
|---|---|
| 5 | [-229, -203, -185, -167, -153, -135, -117, -99, -81, -63, -45, -31, -13, 13, 31, 45, 63, 81, 99, 117, 135, 153, 167, 185, 203, 229] |
| 14 | [-234, -216, -198, -180, -162, -148, -130, -112, -86, -68, -50, -36, -18, 18, 36, 50, 68, 86, 112, 130, 148, 162, 180, 198, 216, 234] |

**Table 4**

| 52-tone dRU index | Constituent 26-tone dRU index | Subcarrier index |
|---|---|---|
| 9 | 5, 14 | [-234, -229, -216, -203, -198, -185, -180, -167, -162, -153, -148, -135, -130, -117, -112, -99, -86, -81, -68, -63, -50, -45, -36, -31, -18, -13, 13, 18, 31, 36, 45, 50, 63, 68, 81, 86, 99, 112, 117, 130, 135, 148, 153, 162, 167, 180, 185, 198, 203, 216, 229, 234] |

It may be understood that the 26-tone dRU index in Table 3, and the 52-tone dRU index and the 26-tone dRU index in Table 4 may be physical dRU indexes (PHY dRU index). It may be further understood that the index values in Table 3 and Table 4 are merely examples, and may be replaced with other values in actual application. An index value of a dRU in a dRU tone plan is not limited in this embodiment of this application.

### (2) 80 MHz dRU tone plan

In 802.11be, each 80 MHz bandwidth includes 16 52-tone RUs (as shown in FIG. 5 above). By spreading the 16 52-tone RUs across the 80 MHz bandwidth, 16 52-tone dRUs can be obtained. In addition, to improve spectrum utilization, two 52-tone dRUs may be additionally constructed in the 80 MHz bandwidth, that is, in this embodiment of this application, the dRU tone plan in the 80 MHz bandwidth may include 18 52-tone dRUs. One 52-tone dRU in the 18 52-tone dRUs includes subcarriers of 26-tone dRUs 5 and 14 (that is, 26-tone dRUs whose indexes are 5 and 14), and another 52-tone dRU includes subcarriers of 26-tone dRUs 24 and 33 (that is, 26-tone dRUs whose indexes are 24 and 33). For example, the two 52-tone dRUs may be respectively represented as a 52-tone dRU 17 (that is, a 52-tone dRU whose index is 17, or a 17^{th} 52-tone dRU) and a 52-tone dRU 18 (that is, a 52-tone dRU whose index is 18, or an 18^{th} 52-tone dRU). In other words, at the 80 MHz bandwidth, the 52-tone dRU 17 may include subcarriers of the 26-tone dRUs 5 and 14, and the 52-tone dRU 18 may include subcarriers of the 26-tone dRU 24 and 33 (that is, 26-tone dRUs whose indexes are 24 and 33). Certainly, the two 52-tone dRUs may alternatively be represented by using other index values. This is not limited in this embodiment of this application.

In 802.11be, each 80 MHz bandwidth includes eight 106-tone RUs (as shown in FIG. 5 above). By spreading the eight 106-tone RUs across the 80 MHz bandwidth, eight 106-tone dRUs can be obtained. In addition, to improve spectrum utilization, one 106-tone dRU may be additionally constructed in the 80 MHz bandwidth, that is, in this embodiment of this application, the dRU tone plan in the 80 MHz bandwidth may include nine 106-tone dRUs. One 106-tone dRU in the nine 106-tone dRUs includes subcarriers of 26-tone dRUs 5, 14, 24, and 33 and two additional subcarriers. For example, the 106-tone dRU may be represented as a 106-tone dRU 9 (that is, a 106-tone dRU whose index is 9, or a 9^{th} 106-tone dRU). In other words, at the 80 MHz bandwidth, the 106-tone dRU 9 may include subcarriers of 26-tone dRUs 5, 14, 24, and 33 and two additional subcarriers, or the 106-tone dRU 9 may include subcarriers of 52-tone dRUs 17 and 18 and two additional subcarriers. Certainly, the 106-tone dRU may alternatively be represented by using another index value. This is not limited in this embodiment of this application.

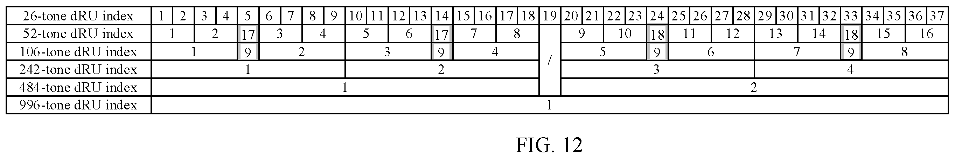

FIG. 12 is a diagram of a logical architecture of dRUs in an 80 MHz bandwidth according to an embodiment of this application. As shown in FIG. 12, the 80 MHz bandwidth may include 37 26-tone dRUs (in which a 26-tone dRU 19 is not defined), and 18 52-tone dRUs or nine 106-tone dRUs may be constructed from the 37 26-tone dRUs (in which a 26-tone dRU 19 is not defined). A 52-tone dRU 17 includes subcarriers of 26-tone dRUs 5 and 14 (that is, 26-tone dRUs whose indexes are 5 and 14), and a 52-tone dRU 18 may include subcarriers of 26-tone dRUs 24 and 33 (that is, 26-tone dRUs whose indexes are 24 and 33). A 106-tone dRU 9 may include subcarriers of 26-tone dRUs 5, 14, 24, and 33 and two additional subcarriers, or include subcarriers of 52-tone dRUs 17 and 18 and two additional subcarriers. It may be understood that the logical architecture of the dRUs shown in FIG. 12 is merely an example. In actual application, an index mapping relationship between dRUs of different sizes (size) may alternatively be in another form. This is not limited in this embodiment of this application.

In a possible implementation, the 52-tone dRU 17 and the 52-tone dRU 18 at the 80 MHz bandwidth have the following features: a spacing between any subcarrier in the 52-tone dRU is greater than or equal to 13, or each subcarrier in the 52-tone dRU exclusively occupies 1 MHz. The 106-tone dRU 9 at the 80 MHz bandwidth has the following features: a quantity of data subcarriers of the 106-tone dRU 9 in 1 MHz is less than or equal to 2, and a quantity of subcarriers of the 106-tone dRU 9 in 1 MHz at which a pilot subcarrier is located is 1.

For example, there may be no more than 37 26-tone dRUs in the 80 MHz bandwidth. Subcarriers included in each of 26-tone dRUs 5, 14, 24, and 33 are shown in the following Table 5. Correspondingly, subcarriers included in each of the 52-tone dRUs 17 and 18 are shown in the following Table 6, and subcarriers included in the 106-tone dRU 9 are shown in the following Table 7.

**Table 5**

| 26-tone dRU index | Subcarrier index |
|---|---|
| 5 | [-477, -444, -398, -362, -329, -291, -255, -222, -185, -140, -107, -70, -33, 33, 70, 107, 140, 185, 222, 255, 291, 329, 362, 398, 444, 477] |
| 14 | [-495, -462, -425, -380, -347, -310, -273, -237, -204, -158, -122, -89, -51, 51, 89, 122, 158, 204, 237, 273, 310, 347, 380, 425, 462, 495] |
| 24 | [-482, -449, -411, -375, -342, -305, -260, -227, -190, -153, -117, -84, -38, 38, 84, 117, 153, 190, 227, 260, 305, 342, 375, 411, 449, 482] |
| 33 | [-500, -467, -430, -393, -357, -324, -278, -242, -209, -171, -135, -102, -65, 65, 102, 135, 171, 209, 242, 278, 324, 357, 393, 430, 467, 500] |

**Table 6**

| 52-tone dRU index | Constituent 26-tone dRU index | Subcarrier index |
|---|---|---|
| 17 | 5, 14 | [-495, -477, -462, -444, -425, -398, -380, -362, -347, -329, - 310, -291, -273, -255, -237, -222, -204, -185, -158, -140, -122, -107, -89, -70, -51, -33, 33, 51, 70, 89, 107, 122, 140, 158, 185, 204, 222, 237, 255, 273, 291, 310, 329, 347, 362, 380, 398, 425, 444, 462, 477, 495] |
| 18 | 24, 33 | [-500, -482, -467, -449, -430, -411, -393, -375, -357, -342, - 324, -305, -278, -260, -242, -227, -209, -190, -171, -153, -135, -117, -102, -84, -65, -38, 38, 65, 84, 102, 117, 135, 153, 171, 190, 209, 227, 242, 260, 278, 305, 324, 342, 357, 375, 393, 411, 430, 449, 467, 482, 500] |

**Table 7**

| 106-tone dRU index | Constituent 26-tone dRU index | Two additional subcarrier indexes | Subcarrier index |
|---|---|---|---|
| 9 | 5, 14, 24, 33 | [-19, 19] | [-500, -495, -482, -477, -467, -462, -449, -444, - 430, -425, -411, -398, -393, -380, -375, -362, - 357, -347, -342, -329, -324, -310, -305, -291, - 278, -273, -260, -255, -242, -237, -227, -222, - 209, -204, -190, -185, -171, -158, -153, -140, - 135, -122, -117, -107, -102, -89, -84, -70, -65, - 51, -38, -33, -19, 19, 33, 38, 51, 65, 70, 84, 89, 102, 107, 117, 122, 135, 140, 153, 158, 171, 185, 190, 204, 209, 222, 227, 237, 242, 255, 260, 273, 278, 291, 305, 310, 324, 329, 342, 347, 357, 362, 375, 380, 393, 398, 411, 425, 430, 444, 449, 462, 467, 477, 482, 495, 500] |

For another example, there may be 36 26-tone dRUs in the 80 MHz bandwidth. Subcarriers included in each of 26-tone dRUs 5, 14, 24, and 33 are shown in the following Table 8. Correspondingly, subcarriers included in each of the 52-tone dRUs 17 and 18 are shown in the following Table 9, and subcarriers included in the 106-tone dRU 9 are shown in the following Table 10.

**Table 8**

| 26-tone dRU index | Subcarrier index |
|---|---|
| 5 | [-477, -445, -401, -365, -333, -297, -261, -229, -193, -149, -117, -81, -45, 45, 81, 117, 149, 193, 229, 261, 297, 333, 365, 401, 445, 477] |
| 14 | [-495, -463, -427, -383, -351, -315, -279, -243, -211, -167, -131, -99, -63, 63, 99, 131, 167, 211, 243, 279, 315, 351, 383, 427, 463, 495] |
| 24 | [-482, -450, -414, -378, -346, -310, -266, -234, -198, -162, -126, -94, -50, 50, 94, 126, 162, 198, 234, 266, 310, 346, 378, 414, 450, 482] |
| 33 | [-500, -468, -432, -396, -360, -328, -284, -248, -216, -180, -144, -112, -76, 76, 112, 144, 180, 216, 248, 284, 328, 360, 396, 432, 468, 500] |

**Table 9**

| 52-tone dRU index | Constituen t 26-tone dRU index | Subcarrier index |
|---|---|---|
| 17 | 5, 14 | [-495, -477, -463, -445, -427, -401, -383, -365, -351, -333, -315, -297, -279, -261, -243, -229, -211, -193, -167, -149, -131, -117, - 99, -81, -63, -45, 45, 63, 81, 99, 117, 131, 149, 167, 193, 211, 229, 243, 261, 279, 297, 315, 333, 351, 365, 383, 401, 427, 445, 463, 477, 495] |
| 18 | 24, 33 | [-500, -482, -468, -450, -432, -414, -396, -378, -360, -346, -328, -310, -284, -266, -248, -234, -216, -198, -180, -162, -144, -126, - 112, -94, -76, -50, 50, 76, 94, 112, 126, 144, 162, 180, 198, 216, 234, 248, 266, 284, 310, 328, 346, 360, 378, 396, 414, 432, 450, 468, 482, 500] |

**Table 10**

| 106-tone dRU index | Constituent 26-tone dRU index | Two additional subcarrier indexes | Subcarrier index |
|---|---|---|---|
| 9 | 5, 14, 24, 33 | [-32, 32] | [-500, -495, -482, -477, -468, -463, -450, -445, - 432, -427, -414, -401, -396, -383, -378, -365, -360, -351, -346, -333, -328, -315, -310, -297, -284, - 279, -266, -261, -248, -243, -234, -229, -216, -211, -198, -193, -180, -167, -162, -149, -144, -131, - 126, -117, -112, -99, -94, -81, -76, -63, -50, -45, - 32, 32, 45, 50, 63, 76, 81, 94, 99, 112, 117, 126, 131, 144, 149, 162, 167, 180, 193, 198, 211, 216, 229, 234, 243, 248, 261, 266, 279, 284, 297, 310, 315, 328, 333, 346, 351, 360, 365, 378, 383, 396, 401, 414, 427, 432, 445, 450, 463, 468, 477, 482, 495, 500] |

It may be understood that the 26-tone dRU index in Table 5 to Table 10, the 52-tone dRU index in Table 6 and Table 9, and the 106-tone dRU index in Table 7 and Table 10 may be physical dRU indexes (PHY dRU index). It may be further understood that the index values in Table 5 to Table 10 are merely examples, and may be replaced with other values in actual application. An index value of a dRU in a dRU tone plan is not limited in this embodiment of this application.

### (3) 160MHz dRU tone plan

In 802.11be, each 160 MHz bandwidth includes 32 52-tone RUs. By spreading the 32 52-tone RUs across the 160 MHz bandwidth, 32 52-tone dRUs can be obtained. In addition, to improve spectrum utilization, four 52-tone dRUs may be additionally constructed in the 160 MHz bandwidth, that is, in this embodiment of this application, the dRU tone plan in the 160 MHz bandwidth may include 36 52-tone dRUs. For example, the four additionally constructed 52-tone dRUs may be respectively represented as 52-tone dRUs 33, 34, 35, and 36 (that is, 52-tone dRUs whose indexes are 33, 34, 35, and 36, or 33^{rd}, 34^{th}, 35^{th}, and 36^{th} 52-tone dRUs). Certainly, the four 52-tone dRUs may alternatively be represented by using other index values. This is not limited in this embodiment of this application.

In 802.11be, each 160 MHz bandwidth includes 16 106-tone RUs. By spreading the 16 106-tone RUs across the 160 MHz bandwidth, 16 106-tone dRUs can be obtained. In addition, to improve spectrum utilization, two 106-tone dRUs may be additionally constructed in the 160 MHz bandwidth, that is, in this embodiment of this application, the dRU tone plan at the 160 MHz bandwidth may include 18 106-tone dRUs. For example, the two additionally constructed 106-tone dRUs may be respectively represented as 106-tone dRUs 17 and 18 (that is, 106-tone dRUs whose indexes are 17 and 18, or 17^{th} and 18^{th} 106-tone dRUs). Certainly, the two 106-tone dRUs may alternatively be represented by using other index values. This is not limited in this embodiment of this application.

In a possible implementation, at the 160 MHz bandwidth, the 52-tone dRU 33 may include subcarriers of 26-tone dRUs 5 and 14, the 52-tone dRU 34 may include subcarriers of 26-tone dRUs 24 and 33, and the 52-tone dRU 35 may include subcarriers of 26-tone dRUs 42 and 51 (that is, 26-tone dRUs whose indexes are 42 and 51). The 52-tone dRU 36 may include subcarriers of 26-tone dRUs 61 and 70 (that is, 26-tone dRUs whose indexes are 61 and 70). At the 160 MHz bandwidth, the 106-tone dRU 17 may include subcarriers of 26-tone dRUs 5, 14, 24, and 33 and two additional subcarriers, or the 106-tone dRU 18 may include subcarriers of 26-tone dRUs 42, 51, 61, and 70 and two additional subcarriers. Alternatively, the 106-tone dRU 17 may include subcarriers of 52-tone dRUs 33 and 34 and two additional subcarriers, and the 106-tone dRU 18 may include subcarriers of 52-tone dRUs 35 and 36 and two additional subcarriers. For example, at the 160 MHz bandwidth, the 52-tone dRUs 33 to 36 and the 106-tone dRUs 17 and 18 all have the following features: a spacing between any subcarrier in the 52-tone dRU and the 106-tone dRU is greater than or equal to 13, or each subcarrier in the 52-tone dRU and the 106-tone dRU exclusively occupies 1 MHz.

For example, 74 26-tone dRUs are defined in the 160 MHz bandwidth, and subcarriers included in each of 26-tone dRUs 5, 14, 24, 33, 42, 51, 61, and 70 are shown in the following Table 11. Correspondingly, subcarriers included in each of the 52-tone dRUs 33 to 36 are shown in the following Table 12, and subcarriers included in each of the 106-tone dRUs 17 and 18 are shown in the following Table 13.

**Table 11**

| 26-tone dRU index | Subcarrier index |
|---|---|
| 5 | [-955, -873, -803, -733, -651, -581, -448, -378, -304, -234, -156, -84, -14, 14, 84, 156, 234, 304, 378, 448, 581, 651, 733, 803, 873, 955] |
| 14 | [-987, -909, -841, -765, -695, -619, -545, -410, -342, -272, -188, -120, -46, 46, 120, 188, 272, 342, 410, 545, 619, 695, 765, 841, 909, 987] |
| 24 | [-973, -891, -821, -747, -669, -601, -474, -396, -324, -254, -170, -102, -32, 32, 102, 170, 254, 324, 396, 474, 601, 669, 747, 821, 891, 973] |
| 33 | [-1005, -935, -859, -785, -715, -633, -563, -428, -360, -286, -208, -138, -64, 64, 138, 208, 286, 360, 428, 563, 633, 715, 785, 859, 935, 1005] |
| 42 | [-960, -886, -816, -738, -664, -596, -461, -391, -309, -239, -165, -89, -19, 19, 89, 165, 239, 309, 391, 461, 596, 664, 738, 816, 886, 960] |
| 51 | [-992, -922, -854, -770, -700, -628, -550, -423, -355, -277, -203, -133, -51, 51, 133, 203, 277, 355, 423, 550, 628, 700, 770, 854, 922, 992] |
| 61 | [-978, -904, -836, -752, -682, -614, -479, -405, -329, -259, -183, -115, -37, 37, 115, 183, 259, 329, 405, 479, 614, 682, 752, 836, 904, 978] |
| 70 | [-1010, -940, -868, -790, -720, -646, -576, -443, -373, -291, -221, -151, -69, 69, 151, 221, 291, 373, 443, 576, 646, 720, 790, 868, 940, 1010] |

**Table 12**

| 52-tone dRU index | Constituent 26-tone dRU index | Subcarrier index |
|---|---|---|
| 33 | 5, 14 | [-987, -955, -909, -873, -841, -803, -765, -733, -695, -651, -619, -581, -545, -448, -410, -378, -342, -304, -272, -234, - 188, -156, -120, -84, -46, -14, 14, 46, 84, 120, 156, 188, 234, 272, 304, 342, 378, 410, 448, 545, 581, 619, 651, 695, 733, 765, 803, 841, 873, 909, 955, 987] |
| 34 | 24, 33 | [-1005, -973, -935, -891, -859, -821, -785, -747, -715, -669, -633, -601, -563, -474, -428, -396, -360, -324, -286, -254, - 208, -170, -138, -102, -64, -32, 32, 64, 102, 138, 170, 208, 254, 286, 324, 360, 396, 428, 474, 563, 601, 633, 669, 715, 747, 785, 821, 859, 891, 935, 973, 1005] |
| 35 | 42, 51 | [-992, -960, -922, -886, -854, -816, -770, -738, -700, -664, -628, -596, -550, -461, -423, -391, -355, -309, -277, -239, - 203, -165, -133, -89, -51, -19, 19, 51, 89, 133, 165, 203, 239, 277, 309, 355, 391, 423, 461, 550, 596, 628, 664, 700, 738, 770, 816, 854, 886, 922, 960, 992] |
| 36 | 61, 70 | [-1010, -978, -940, -904, -868, -836, -790, -752, -720, -682, -646, -614, -576, -479, -443, -405, -373, -329, -291, -259, - 221, -183, -151, -115, -69, -37, 37, 69, 115, 151, 183, 221, 259, 291, 329, 373, 405, 443, 479, 576, 614, 646, 682, 720, 752, 790, 836, 868, 904, 940, 978, 1010] |

**Table 13**

| 106-tone dRU index | Constituent 26-tone dRU index | Two additional subcarrier indexes | Subcarrier index |
|---|---|---|---|
| 17 | 5, 14, 24, 33 | [-493, 493] | [-1005, -987, -973, -955, -935, -909, -891, -873, - 859, -841, -821, -803, -785, -765, -747, -733, - 715, -695, -669, -651, -633, -619, -601, -581, - 563, -545, -493, -474, -448, -428, -410, -396, - 378, -360, -342, -324, -304, -286, -272, -254, - 234, -208, -188, -170, -156, -138, -120, -102, -84, -64, -46, -32, -14, 14, 32, 46, 64, 84, 102, 120, 138, 156, 170, 188, 208, 234, 254, 272, 286, 304, 324, 342, 360, 378, 396, 410, 428, 448, 474, 493, 545, 563, 581, 601, 619, 633, 651, 669, 695, 715, 733, 747, 765, 785, 803, 821, 841, 859, 873, 891, 909, 935, 955, 973, 987, 1005] |
| 18 | 42, 51, 61, 70 | [-531, 531] | [-1010, -992, -978, -960, -940, -922, -904, -886, - 868, -854, -836, -816, -790, -770, -752, -738, - 720, -700, -682, -664, -646, -628, -614, -596, - 576, -550, -531, -479, -461, -443, -423, -405, - 391, -373, -355, -329, -309, -291, -277, -259, - 239, -221, -203, -183, -165, -151, -133, -115, -89, -69, -51, -37, -19, 19, 37, 51, 69, 89, 115, 133, 151, 165, 183, 203, 221, 239, 259, 277, 291, 309, 329, 355, 373, 391, 405, 423, 443, 461, 479, 531, 550, 576, 596, 614, 628, 646, 664, 682, 700, 720, 738, 752, 770, 790, 816, 836, 854, 868, 886, 904, 922, 940, 960, 978, 992, 1010] |

It may be understood that the 26-tone dRU index in Table 11 to Table 13, the 52-tone dRU index in Table 12, and the 106-tone dRU index in Table 13 may be physical dRU indexes (PHY dRU index). It may be further understood that the index values in Table 11 to Table 13 are merely examples, and may be replaced with other values in actual application. An index value of a dRU in a dRU tone plan is not limited in this embodiment of this application.

It may be understood that a 320 MHz dRU tone plan may be understood as a combination of two 160 MHz dRU tone plans, or may be understood as a combination of four 80 MHz dRU tone plans. In 802.11be, a 320 MHz bandwidth includes 64 52-tone RUs. By spreading the 64 52-tone RUs across the 320 MHz bandwidth, 64 52-tone dRUs can be obtained. In addition, eight 52-tone dRUs may be additionally constructed, and the eight additionally constructed 52-tone dRUs may be respectively represented as 52-tone dRUs 65 to 72. A possible construction manner is: The 52-tone dRU 65 includes subcarriers of 26-tone dRUs 5 and 14, the 52-tone dRU 66 includes subcarriers of 26-tone dRUs 24 and 33, the 52-tone dRU 67 includes subcarriers of 26-tone dRUs 42 and 51, the 52-tone dRU 68 includes subcarriers of 26-tone dRUs 61 and 70, the 52-tone dRU 69 includes subcarriers of 26-tone dRUs 79 and 88, the 52-tone dRU 70 includes subcarriers of 26-tone dRUs 98 and 107, the 52-tone dRU 71 includes subcarriers of 26-tone dRUs 116 and 125, and the 52-tone dRU 72 includes subcarriers of 26-tone dRUs 135 and 144.

In 802.11be, a 320 MHz bandwidth includes 32 106-tone RUs. By spreading the 32 106-tone RUs across the 320 MHz bandwidth, 32 106-tone dRUs can be obtained. In addition, four 106-tone dRUs may be additionally constructed, and the four additionally constructed 106-tone dRUs may be respectively represented as 106-tone dRUs 33, 34, 35, and 36. A possible construction manner is: The 106-tone dRU 33 includes subcarriers of 26-tone dRUs 5, 14, 24, and 33 and two additional subcarriers, the 106-tone dRU 34 includes subcarriers of 26-tone dRUs 42, 51, 61, and 70 and two additional subcarriers, the 106-tone dRU 35 includes subcarriers of 26-tone dRUs 79, 88, 98, and 107 and two additional subcarriers, and the 106-tone dRU 36 includes subcarriers of 26-tone dRUs 116, 125, 135, and 144 and two additional subcarriers. Another possible construction manner is: The 106-tone dRU 33 includes subcarriers of 52-tone dRUs 65 and 66 and two additional subcarriers, the 106-tone dRU 34 includes subcarriers of 52-tone dRUs 67 and 68 and two additional subcarriers, the 106-tone dRU 35 includes subcarriers of 52-tone dRUs 69 and 70 and two additional subcarriers, and the 106-tone dRU 36 includes subcarriers of 52-tone dRUs 71 and 72 and two additional subcarriers.

The dRU tone plan designed in this embodiment of this application includes more dRUs (for example, there are nine 52-tone dRUs at 40 MHz, 18 52-tone dRUs or nine 106-tone dRUs at 80 MHz, and 36 52-tone dRUs or 18 106-tone dRUs at 160 MHz), and transmission is performed based on the dRU tone plan, so that not only a transmit power can be improved, but also spectrum utilization can be improved.

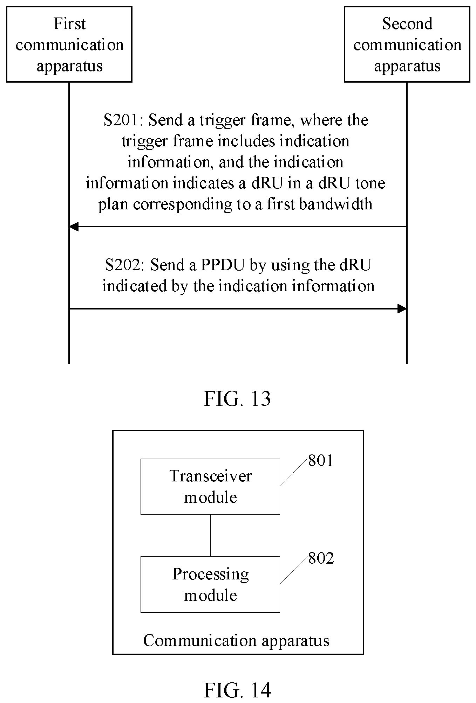

FIG. 13 is another schematic flowchart of a communication method based on a distributed resource unit according to an embodiment of this application. A first communication apparatus in the method may be the STA in FIG. 1, and correspondingly, a second communication apparatus may be the AP in FIG. 1. Certainly, the first communication apparatus in the method may alternatively be a non-AP MLD, and correspondingly, the second communication apparatus may be an AP MLD. This is not limited in this embodiment of this application.

In a possible implementation, the embodiment shown in FIG. 13 may be implemented in combination with the dRU tone plan in the embodiment shown in FIG. 8, or may be implemented independently. This is not limited in this embodiment of this application.

As shown in FIG. 13, the communication method based on a distributed resource unit includes but is not limited to the following steps.

S201: The second communication apparatus sends a trigger frame, where the trigger frame includes indication information, and the indication information indicates a dRU in a dRU tone plan corresponding to a first bandwidth. The dRU tone plan corresponding to the first bandwidth includes any one of the following: nine 52-tone dRUs when the first bandwidth is 40 MHz, 18 52-tone dRUs when the first bandwidth is 80 MHz, 36 52-tone dRUs when the first bandwidth is 160 MHz, 72 52-tone dRUs when the first bandwidth is 320 MHz, nine 106-tone dRUs when the first bandwidth is 80 MHz, 18 106-tone dRUs when the first bandwidth is 160 MHz, or 36 106-tone dRUs when the first bandwidth is 320 MHz.

Correspondingly, the first communication apparatus receives the trigger frame.

S202: The first communication apparatus sends a PPDU by using the dRU indicated by the indication information.

Correspondingly, the second communication apparatus receives the PPDU on a corresponding dRU.

In a possible implementation, the indication information may be carried in a user information field of the trigger frame. For example, the indication information may include an RU allocation subfield (RU Allocation subfield) and/or a primary/secondary 160 subfield (PS160 subfield). Certainly, the indication information may alternatively be implemented by using another field. This is not limited in this embodiment of this application. The RU allocation subfield and the PS160 subfield may be used to jointly indicate a dRU (including a size and a location) in the dRU tone plan corresponding to the first bandwidth. The dRU tone plan corresponding to the first bandwidth may include but is not limited to any one of the following: nine 52-tone dRUs when the first bandwidth is 40 MHz, 18 52-tone dRUs when the first bandwidth is 80 MHz, 36 52-tone dRUs when the first bandwidth is 160 MHz, 72 52-tone dRUs when the first bandwidth is 320 MHz, nine 106-tone dRUs when the first bandwidth is 80 MHz, 18 106-tone dRUs when the first bandwidth is 160 MHz, or 36 106-tone dRUs when the first bandwidth is 320 MHz. It may be understood that when the indication information (for example, the RU allocation subfield and the PS160 subfield) has different values, different dRUs may be indicated.

For example, a length of the RU allocation subfield is 8 bits, which are respectively represented as B0, B1, B2, ..., and B7. A length of the PS160 subfield is 1 bit. B7 to B1 of the RU Allocation subfield have a total of 7 bits, which may represent 128 (2⁷) entries (that is, values 0 to 127), and some of the entries (that is, values) may indicate dRUs. In a possible implementation, for an indication manner of the indication information (for example, the RU allocation subfield and the PS160 subfield), refer to Table 14.

**Table 14**

| PS160 subfield | B0 of the RU allocation subfield | B7 to B1 of the RU allocation subfield | Bandwidth BW (MHz) | dRU size | dRU index | Physical dRU index |
|---|---|---|---|---|---|---|
| 0 to 3 | | 37 to 40 | 20, 40, 80, 160, or 320 | 52 | dRU 1 to dRU 4, respectively | |
| 0 to 3 | | 41 to 44 | 40, 80, 160, or 320 | | dRU 5 to dRU 8, respectively | 16×N + dRU index |
| 0 to 3 | | 45 to 52 | 80, 160, or 320 | | dRU 9 to dRU 16, respectively | |
| 0 to 3 | | 53, 54 | 20, 40, 80, 160, or 320 | 106 | dRU 1 and dRU 2, respectively | 8×N + dRU index |
| 0 to 3 | | 55, 56 | 40, 80, 160, or 320 | | dRU 3 and dRU 4, respectively | |
| 0 to 3 | | 57 to 60 | 80, 160, or 320 | | dRU 5 to dRU 8, respectively | |
| 0 | | First value | 40 | 52 | dRU 9 | dRU 9 |
| 0 to 3 | | Second value and third value | 80, 160, or 320 | 52 | dRU 17 and dRU 18, respectively | 16×(BW/80-1)+2×N+dRU index |
| 0 to 3 | | Fourth value | 80, 160, or 320 | 106 | dRU 9 | 8×(BW/80-1)+N+dRU index |
| 0 to 3 | | Fifth value | 80, 160, or 320 | 26 | dRU 19 | 37×N + dRU index |

It may be understood that, for a transmit end (for example, the second communication apparatus), Table 14 may be understood as an indication manner of the RU allocation subfield and the PS160 subfield. For a receive end (for example, the first communication apparatus), Table 14 may be understood as an interpretation of the RU allocation subfield and the PS160 subfield by the receive end. It may be further understood that the transmit end and the receive end may have consistent understandings of the RU allocation subfield and the PS160 subfield.

A value of N in Table 14 may be determined based on some or all of the bandwidth BW, the PS160 subfield, the B0 bit of the RU allocation subfield, and configuration information. For example, a relationship between N and the bandwidth BW, the PS160 subfield, the B0 bit of the RU allocation subfield, and the configuration information may be shown in Table 2. Details are not described herein again.

It may be understood that Table 14 lists only indication manners of some dRUs. In actual application, the indication information may further indicate more dRUs. For example, for a dRU indication manner that is not shown in Table 14, refer to an RU/MRU indication manner in 802.11be (that is, Table 1). A difference includes that the RU in Table 1 is replaced with a dRU.

It may be understood that, in Table 14, the bandwidth BW determines a value range of a total of 2 bits including the PS160 subfield (with a length of 1 bit) and B0 of the RU allocation subfield. For example, when the bandwidth BW is 160 MHz, a value range of the PS160 subfield and B0 of the RU allocation subfield is 0 to 1; or when the bandwidth BW is 320 MHz, a value range of the PS160 subfield and B0 of the RU allocation subfield is 0 to 3. Therefore, when a next-generation standard of 802.11be, for example, 802.11bn, supports a larger bandwidth (greater than 320 MHz), more bits may be required to represent the larger bandwidth. In other words, when 802.11bn supports a larger bandwidth (greater than 320 MHz), a quantity of bits of the RU allocation subfield and/or the PS160 subfield may need to be extended, to indicate dRUs at various bandwidths.

For example, the fifth value in Table 14 may be 18. In a possible implementation, when the bandwidth is 80 MHz, 160 MHz, or 320 MHz, there may be a 26-tone dRU 19 (that is, a 26-tone dRU whose physical dRU index is 19). The 26-tone dRU 19 may be formed by spreading, across an 80 MHz bandwidth, an RU that is located near a direct current subcarrier and in an 80 MHz PPDU of 802.11ax. Alternatively, the 26-tone dRU 19 may be a 26-tone dRU forming a 996-tone dRU, and the 26-tone dRU, two 484-tone dRUs, and two additional subcarriers may form a 996-tone dRU.

For example, at least one of the first value, the second value, the third value, and the fourth value in Table 14 may be a value in a range of 107 to 127. For example, the first value may be 107, the second value and the third value may be 108 and 109, respectively, and the fourth value may be 110. Certainly, the first value to the fifth value may alternatively be values in a range of 0 to 127, and the first value to the fifth value are different from each other. For example, for dRUs of a same size at different bandwidths, values of B7 to B1 of the RU allocation subfield may be consecutive integers. For example, 37 to 55 may represent 52-tone dRUs in different bandwidths, where the first value may be 53, the second value may be 54, and the third value may be 55. Values of B7 to B1 of the RU allocation subfield may subsequently be shifted backwards. For example, values of B7 to B1 of the RU allocation subfield may start from 56 to represent 106-tone dRUs in different bandwidths. For example, 56 to 64 represent 106-tone dRUs in different bandwidths, where the fourth value may be 64. This is not limited in this embodiment of this application.

For example, an example in which the first value, the second value, the third value, and the fourth value are 107 to 110, respectively is used. When a value of B7 to B1 of the RU Allocation subfield is 107, it indicates that the bandwidth BW is 40 MHz, and an allocated frequency domain resource is a 52-tone dRU whose physical dRU index is 9. When B7 to B1 of the RU Allocation subfield is 108 or 109, it indicates that the bandwidth is 80 MHz, 160 MHz, or 320 MHz, and the allocated frequency domain resource is an additional 52-tone dRU. The PS160 subfield may indicate a logical 80 MHz location at which the dRU is located. The logical 80 MHz location does not represent a frequency domain location of an 80 MHz sub-channel in an actual bandwidth, and is only used to calculate a physical dRU index. For example, when the bandwidth of the PPDU is 160 MHz, PS160 subfield is 0, and B0=0 or 1. In this case, a total of four 52-tone dRUs may be indicated. Details are as follows: when PS160 subfield=0, B0=0, and B7 to B1 of the RU Allocation subfield is 108, a PHY dRU index of the indicated 52-tone dRU is 16×1+2×0+17=33; when PS160 subfield=0, B0=0, and B7 to B1 of the RU Allocation subfield is 109, a PHY dRU index of the indicated 52-tone dRU is 16×1+2×0+18=34; when PS160 subfield=0, B0=1, and B7 to B1 of the RU Allocation subfield is 108, a PHY dRU index of the indicated 52-tone dRU is 16×1+2×1+17=35; and when PS160 subfield=0, B0=1, and B7 to B1 of the RU Allocation subfield is 109, a PHY dRU index of the indicated 52-tone dRU is 16×1+2×1+18=36.

When B7 to B1 of the RU Allocation subfield is 110, it indicates that the bandwidth is 80 MHz, 160 MHz, or 320 MHz, and the allocated frequency domain resource is a 106-tone dRU 9. The PS160 subfield may indicate a logical 80 MHz location at which the dRU is located. The logical 80 MHz location does not represent a frequency domain location of an 80 MHz sub-channel in an actual bandwidth, and is only used to calculate a physical dRU index. For example, when the bandwidth of the PPDU is 160 MHz, PS160 subfield is 0, and B0=0 or 1. In this case, a total of two 106-tone dRUs may be indicated. Details are as follows: when PS160 subfield=0, B0=0, and B7 to B1 of the RU Allocation subfield is 110, a PHY dRU index of the indicated 106-tone dRU is 8×1+0+9=17; and when PS160 subfield=0, B0=1, and B7 to B1 of the RU Allocation subfield is 110, a PHY dRU index of the indicated 106-tone dRU is 8×1+1+9=18.

In addition, when B7 to B1 of the RU Allocation subfield is 18, it indicates that the bandwidth is 80 MHz, 160 MHz, or 320 MHz, and the allocated frequency domain resource is a 26-tone dRU 19.

In a possible implementation, when the bandwidth BW is 40 MHz, the indication information (the PS160 subfield and the RU allocation subfield in Table 14) may indicate a dRU in the 40 MHz dRU tone plan. The 40 MHz dRU tone plan includes but is not limited to 52-tone dRUs whose physical dRU indexes are 1 to 9 (or 1^{st} to 9^{th} 52-tone dRUs). One 52-tone dRU in the nine 52-tone dRUs includes subcarriers of 26-tone dRUs 5 and 14 (that is, 26-tone dRUs whose physical dRU indexes are 5 and 14). For example, in Table 14, the 52-tone dRU whose physical dRU index is 9 when the bandwidth BW is 40 MHz includes subcarriers of 26-tone dRUs whose physical dRU indexes are 5 and 14. Alternatively, subcarriers included in the 52-tone dRU 9 are the same as subcarriers included in the 26-tone dRUs 5 and 14. For example, subcarriers included in the 52-tone dRU 9 at the 40 MHz bandwidth are shown in Table 4, and subcarriers included in the 26-tone dRUs 5 and 14 are shown in Table 3. Details are not described herein again.

When the bandwidth BW is 80 MHz, the indication information (the PS160 subfield and the RU allocation subfield in Table 14) may indicate a dRU in the 80 MHz dRU tone plan. The 80 MHz dRU tone plan includes but is not limited to 52-tone dRUs whose physical dRU indexes are 1 to 18 (or 1^{st} to 18^{th} 52-tone dRUs), or 106-tone dRUs whose physical dRU indexes are 1 to 9 (or 1^{st} to 9^{th} 106-tone dRUs). One 52-tone dRU in the 18 52-tone dRUs includes subcarriers of 26-tone dRUs 5 and 14 (that is, 26-tone dRUs whose physical dRU indexes are 5 and 14), and another 52-tone dRU includes subcarriers of 26-tone dRUs 24 and 33 (that is, 26-tone dRUs whose physical dRU indexes are 24 and 33). For example, in Table 14, the 52-tone dRU whose physical dRU index is 17 when the bandwidth BW is 80 MHz includes subcarriers of 26-tone dRUs whose physical dRU indexes are 5 and 14. In Table 14, the 52-tone dRU whose physical dRU index is 18 when the bandwidth BW is 80 MHz includes subcarriers of 26-tone dRUs whose physical dRU indexes are 24 and 33. One 106-tone dRU in the nine 106-tone dRUs includes subcarriers of 26-tone dRUs 5, 14, 24, and 33 and two additional subcarriers. For example, in Table 14, the 106-tone dRU whose physical dRU index is 9 when the bandwidth BW is 80 MHz includes subcarriers of 26-tone dRUs 5, 14, 24, and 33 and two additional subcarriers; or a 106-tone dRU 9 may include subcarriers of 52-tone dRUs 17 and 18 and two additional subcarriers. For example, subcarriers included in the 52-tone dRUs 17 and 18 at the 80 MHz bandwidth are shown in Table 6 or Table 9, and subcarriers included in the 26-tone dRUs 5, 14, 24, and 33 are shown in Table 5 or Table 8. Details are not described herein again. For example, subcarriers included in the 106-tone dRU 9 at the 80 MHz bandwidth are shown in Table 7 or Table 10. Details are not described herein again.

When the bandwidth BW is 160 MHz, the indication information (the PS160 subfield and the RU allocation subfield in Table 14) may indicate a dRU in the 160 MHz dRU tone plan. The 160 MHz dRU tone plan includes but is not limited to 52-tone dRUs whose physical dRU indexes are 1 to 36 (or 1^{st} to 36^{th} 52-tone dRUs), or 106-tone dRUs whose physical dRU indexes are 1 to 18 (or 1^{st} to 18^{th} 106-tone dRUs). Four 52-tone dRUs in the 36 52-tone dRUs are composed of subcarriers of 26-tone dRUs 5, 14, 24, 33, 42, 51, 61, and 70. Two 106-tone dRUs in the 18 106-tone dRUs are composed of subcarriers of 26-tone dRUs 5, 14, 24, 33, 42, 51, 61, and 70 and four additional subcarriers. For example, in Table 14, when the bandwidth BW is 160 MHz, the 52-tone dRU whose physical dRU index is 33 includes subcarriers of 26-tone dRUs whose physical dRU indexes are 5 and 14; the 52-tone dRU whose physical dRU index is 34 includes subcarriers of 26-tone dRUs whose physical dRU indexes are 24 and 33; the 52-tone dRU whose physical dRU index is 35 includes subcarriers of 26-tone dRUs whose physical dRU indexes are 42 and 51; and the 52-tone dRU whose physical dRU index is 36 includes subcarriers of 26-tone dRUs whose physical dRU indexes are 61 and 70. For example, in Table 14, when the bandwidth BW is 160 MHz, the 106-tone dRU whose physical dRU index is 17 includes subcarriers of 26-tone dRUs whose physical dRU indexes are 5, 14, 24, and 33, and subcarriers whose subcarrier indexes are [-493, 493]; and the 106-tone dRU whose physical dRU index is 18 includes subcarriers of 26-tone dRUs whose physical dRU indexes are 42, 51, 61, and 70, and subcarriers whose subcarrier indexes are [-531, 531]. For example, subcarriers included in 52-tone dRUs 33 to 36 at the 160 MHz bandwidth are shown in Table 12, and subcarriers included in 26-tone dRUs 5, 14, 24, 33, 42, 51, 61, and 70 are shown in Table 11. Details are not described herein again. For example, subcarriers included in 106-tone dRUs 17 and 18 at the 160 MHz bandwidth are shown in Table 13. Details are not described herein.

When the bandwidth BW is 320 MHz, the indication information (the PS160 subfield and the RU allocation subfield in Table 14) may indicate a dRU in the 320 MHz dRU tone plan. The 320 MHz dRU tone plan includes but is not limited to 52-tone dRUs whose physical dRU indexes are 1 to 72 (or 1^{st} to 72^{nd} 52-tone dRUs), or 106-tone dRUs whose physical dRU indexes are 1 to 36 (or 1^{st} to 36^{th} 106-tone dRUs). Eight 52-tone dRUs in the 72 52-tone dRUs are composed of subcarriers that form 26-tone dRUs 5, 14, 24, 33, 42, 51, 61, 70, 79, 88, 98, 107, 116, 125, 135, and 144. Four 106-tone dRUs in the 36 106-tone dRUs are composed of subcarriers that form 26-tone dRUs 5, 14, 24, 33, 42, 51, 61, 70, 79, 88, 98, 107, 116, 125, 135, and 144 and eight additional subcarriers. For example, in Table 14, when the bandwidth BW is 320 MHz, a 52-tone dRU 65 includes subcarriers of 26-tone dRUs 5 and 14, a 52-tone dRU 66 includes subcarriers of 26-tone dRUs 24 and 33, a 52-tone dRU 67 includes subcarriers of 26-tone dRUs 42 and 51, a 52-tone dRU 68 includes subcarriers of 26-tone dRUs 61 and 70, a 52-tone dRU 69 includes subcarriers of 26-tone dRUs 79 and 88, a 52-tone dRU 70 includes subcarriers of 26-tone dRUs 98 and 107, a 52-tone dRU 71 includes subcarriers of 26-tone dRUs 116 and 125, and a 52-tone dRU 72 includes subcarriers of 26-tone dRUs 135 and 144. For example, in Table 14, when the bandwidth BW is 320 MHz, a 106-tone dRU 33 includes subcarriers of 26-tone dRUs 5, 14, 24, and 33 and two additional subcarriers, a 106-tone dRU 34 includes subcarriers of 26-tone dRUs 42, 51, 61, and 70 and two additional subcarriers, a 106-tone dRU 35 includes subcarriers of 26-tone dRUs 79, 88, 98, and 107 and two additional subcarriers, and a 106-tone dRU 36 includes subcarriers of 26-tone dRUs 116, 125, 135, and 144 and two additional subcarriers. Alternatively, the 106-tone dRU 33 includes subcarriers of 52-tone dRUs 65 and 66 and two additional subcarriers, the 106-tone dRU 34 includes subcarriers of 52-tone dRUs 67 and 68 and two additional subcarriers, the 106-tone dRU 35 includes subcarriers of 52-tone dRUs 69 and 70 and two additional subcarriers, and the 106-tone dRU 36 includes subcarriers of 52-tone dRUs 71 and 72 and two additional subcarriers.

In a possible implementation, the first communication apparatus may allocate dRUs to one or more second communication apparatuses in the manner in Table 14. It may be understood that the trigger frame may include one or more user information fields, and one user information field may include information that one second communication apparatus (for example, a station) needs to read. For example, the user information field herein may be an EHT, a UHR, or another variant user information field (EHT or UHR or others variant User Info field). One user information field of the trigger frame includes one piece of indication information, and the indication information (for example, the PS160 subfield and the RU allocation subfield) in different user information fields may have different values, so that different (or non-conflicting) dRUs are allocated to different second communication apparatuses. For ease of description, in this application, one second communication apparatus (for example, a station) is used as an example for description.

For example, the first communication apparatus (for example, an AP) sends a trigger frame, and indication information in a user information field of the trigger frame may be set in the manner in Table 14, to allocate a dRU to the second communication apparatus. The second communication apparatus (for example, an STA) may determine, based on the indication information in the trigger frame, the dRU allocated to the second communication apparatus, and may send a PPDU (for example, send a TB PPDU) by using the dRU allocated to the second communication apparatus.

It may be understood that, because the first communication apparatus (for example, an AP) may simultaneously schedule a plurality of second communication apparatuses (for example, STAs) to perform uplink transmission, the first communication apparatus (for example, an AP) may determine, based on a dRU allocated to each second communication apparatus (for example, a STA) and the dRU tone plan, which subcarriers carry data belonging to a same second communication apparatus (for example, an STA), so that the first communication apparatus (for example, an AP) can distinguish uplink data from different second communication apparatuses (for example, STAs).

In this embodiment of this application, based on reusing an existing RU/MRU indication to schedule a dRU resource, a dRU indication method is provided to indicate more dRUs, so that an access point can schedule more stations to perform uplink communication (one dRU is allocated to one station), thereby improving spectrum utilization of uplink transmission. In addition, this embodiment of this application can further resolve a problem that indication signaling is insufficient when the RU/MRU indication method is reused to indicate the dRU.

The foregoing content describes in detail the method provided in this application. To facilitate implementation of the foregoing solutions in embodiments of this application, embodiments of this application further provide a corresponding apparatus or device.

In this application, the communication apparatus is divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that, in this application, division into the modules is an example, and is merely a logical function division. In actual implementation, another division manner may be used. The following describes, in detail with reference to FIG. 14 to FIG. 16, the communication apparatuses in embodiments of this application.

FIG. 14 is a diagram of a structure of a communication apparatus according to an embodiment of this application. As shown in FIG. 14, the communication apparatus includes a transceiver module 801 and a processing module 802. The transceiver module 801 may implement a corresponding communication function. The processing module 802 is configured to process data. For example, the transceiver module 801 may also be referred to as an interface, a communication interface, a communication module, or the like.

In some embodiments of this application, the communication apparatus may be the first communication apparatus shown above. That is, the communication apparatus shown in FIG. 14 may be configured to perform steps, functions, or the like performed by the first communication apparatus in the foregoing method embodiments. For example, the communication apparatus may be the first communication apparatus or a chip, a functional module, or the like configured in the first communication apparatus. This is not limited in embodiments of this application. The transceiver module 801 is configured to perform a receiving/sending-related operation of the first communication apparatus in the foregoing method embodiments, and the processing module 802 is configured to perform a processing-related operation of the first communication apparatus in the foregoing method embodiments.

For example, the transceiver module 801 is configured to receive a trigger frame, where the trigger frame includes indication information, and the indication information indicates a dRU in a dRU tone plan corresponding to a first bandwidth. The transceiver module 801 is further configured to send a PPDU by using the dRU indicated by the indication information.

For example, the processing module 802 is configured to generate the PPDU.

It may be understood that the transceiver module 801 may receive the trigger frame from another communication apparatus, or the transceiver module 801 inputs the trigger frame from another component or another functional module in the communication apparatus, or the like. Related descriptions of inputting other information by the transceiver module are similar. Details are not described below again.

In this embodiment of this application, for descriptions of the indication information, the dRU tone plan corresponding to the first bandwidth, the dRU, the PPDU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 13). Details are not described herein again. In addition, for a technical effect of this embodiment of this application, refer to the technical effects in the foregoing method embodiments. For brevity, details are not described herein.

For example, the processing module 802 is configured to generate a PPDU based on a dRU tone plan at a 40 MHz bandwidth, where the dRU tone plan includes nine 52-tone dRUs. The transceiver module 801 is configured to send the PPDU.

It may be understood that the transceiver module 801 may send the PPDU to another communication apparatus, or the transceiver module 801 outputs the PPDU from the processing module 802 to another component, another functional module, or the like in the communication apparatus. Related descriptions of outputting other information by the transceiver module are similar. Details are not described below again.

In this embodiment of this application, for descriptions of the dRU tone plan at the 40 MHz bandwidth, a 52-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 8). Details are not described herein again. In addition, for a technical effect of this embodiment of this application, refer to the technical effects in the foregoing method embodiments. For brevity, details are not described herein.

For example, the processing module 802 is configured to generate a PPDU based on a dRU tone plan at an 80 MHz bandwidth, where the dRU tone plan includes 18 52-tone dRUs or nine 106-tone dRUs. The transceiver module 801 is configured to send the PPDU.

In this embodiment of this application, for descriptions of the dRU tone plan at the 80 MHz bandwidth, the 52-tone dRU, a 106-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 8). Details are not described herein again. In addition, for a technical effect of this embodiment of this application, refer to the technical effects in the foregoing method embodiments. For brevity, details are not described herein.

For example, the processing module 802 is configured to generate a PPDU based on a dRU tone plan at a 160 MHz bandwidth, where the dRU tone plan includes 36 52-tone dRUs or 18 106-tone dRUs. The transceiver module 801 is configured to send the PPDU.

In this embodiment of this application, for descriptions of the dRU tone plan at the 160 MHz bandwidth, the 52-tone dRU, the 106-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 8). Details are not described herein again. In addition, for a technical effect of this embodiment of this application, refer to the technical effects in the foregoing method embodiments. For brevity, details are not described herein.

Refer to FIG. 14 again. In some other embodiments of this application, the communication apparatus may be the second communication apparatus shown above. That is, the communication apparatus shown in FIG. 14 may be configured to perform steps, functions, or the like performed by the second communication apparatus in the foregoing method embodiments. For example, the communication apparatus may be the second communication apparatus or a chip, a functional module, or the like configured in the second communication apparatus. This is not limited in embodiments of this application. The transceiver module 801 is configured to perform a receiving/sending-related operation of the second communication apparatus in the foregoing method embodiments, and the processing module 802 is configured to perform a processing-related operation of the second communication apparatus in the foregoing method embodiments.

For example, the transceiver module 801 is configured to send a trigger frame, where the trigger frame includes indication information, and the indication information indicates a dRU in a dRU tone plan corresponding to a first bandwidth. The transceiver module 801 is further configured to receive a PPDU on the dRU indicated by the indication information.

For example, the processing module 802 is configured to generate the trigger frame.

In this embodiment of this application, for descriptions of the indication information, the dRU tone plan corresponding to the first bandwidth, the dRU, the PPDU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 13). Details are not described herein again. In addition, for a technical effect of this embodiment of this application, refer to the technical effects in the foregoing method embodiments. For brevity, details are not described herein.

For example, the transceiver module 801 is configured to receive a PPDU based on a dRU tone plan at a 40 MHz bandwidth, where the dRU tone plan includes nine 52-tone dRUs. The processing module 802 is configured to process the PPDU.

In this embodiment of this application, for descriptions of the dRU tone plan at the 40 MHz bandwidth, a 52-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 8). Details are not described herein again. In addition, for a technical effect of this embodiment of this application, refer to the technical effects in the foregoing method embodiments. For brevity, details are not described herein.

For example, the transceiver module 801 is configured to receive a PPDU based on a dRU tone plan at an 80 MHz bandwidth, where the dRU tone plan includes 18 52-tone dRUs or nine 106-tone dRUs. The processing module 802 is configured to process the PPDU.

In this embodiment of this application, for descriptions of the dRU tone plan at the 80 MHz bandwidth, the 52-tone dRU, a 106-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 8). Details are not described herein again. In addition, for a technical effect of this embodiment of this application, refer to the technical effects in the foregoing method embodiments. For brevity, details are not described herein.

For example, the transceiver module 801 is configured to receive a PPDU based on a dRU tone plan at a 160 MHz bandwidth, where the dRU tone plan includes 36 52-tone dRUs or 18 106-tone dRUs. The processing module 802 is configured to process the PPDU.

In this embodiment of this application, for descriptions of the dRU tone plan at the 160 MHz bandwidth, the 52-tone dRU, the 106-tone dRU, and the like, refer to the descriptions in the foregoing method embodiments. Details are not described herein again.

It may be understood that specific descriptions of the transceiver module and the processing module in embodiments of this application are merely examples. For specific functions, steps, or the like performed by the transceiver module and the processing module, refer to the foregoing method embodiments (as shown in FIG. 8). Details are not described herein again. In addition, for a technical effect of this embodiment of this application, refer to the technical effects in the foregoing method embodiments. For brevity, details are not described herein.

The foregoing describes the communication apparatus in embodiments of this application, and the following describes a possible product form of the communication apparatus. It should be understood that any product in any form that has a function of the communication apparatus in FIG. 8 falls within the protection scope of embodiments of this application. It should be further understood that the following description is merely an example, and does not limit a product form of the communication apparatus in embodiments of this application.

In a possible implementation, in the communication apparatus shown in FIG. 14, the processing module 802 may be one or more processors, and the transceiver module 801 may be a transceiver; or the transceiver module 801 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A connection manner between the processor and the transceiver is not limited in embodiments of this application. In a process of performing the foregoing method, a process of sending information (for example, sending a PPDU) in the foregoing method may be understood as a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information (for example, receiving a PPDU) in the foregoing method may be understood as a process of receiving the input information by the processor. When the processor receives the input information, the transceiver receives the information and inputs the information to the processor. Further, after the transceiver receives the information, other processing may need to be performed on the information before the information is input into the processor.

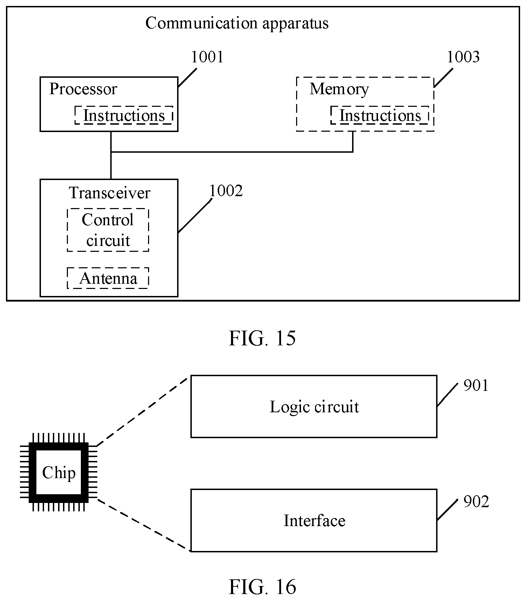

FIG. 15 is a diagram of another structure of a communication apparatus according to an embodiment of this application. The communication apparatus may be a first communication apparatus, a second communication apparatus, or a chip in the first communication apparatus or the second communication apparatus. FIG. 15 shows only main components of the communication apparatus. In addition to a processor 1001, the communication apparatus may further include a transceiver 1002, a memory 1003, and an input/output apparatus (not shown in the figure).

The processor 1001 is mainly configured to process a communication protocol and communication data, control the entire communication apparatus, execute a software program, and process data of the software program. The memory 1003 is mainly configured to store the software program and data. In a design, the transceiver 1002 may be referred to as a transceiver unit, a transceiver, a transceiver circuit, or the like, and is configured to implement a transceiver function. The transceiver 1002 may include a receiver and a transmitter. The receiver may be referred to as a receiver, a receiver circuit, or the like, and is configured to implement a receiving function. The transmitter may be referred to as a transmitter, a transmitter circuit, or the like, and is configured to implement a sending function. In another design, the transceiver 1002 may include a control circuit and an antenna. The control circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user, and output data to the user.

After the communication apparatus is powered on, the processor 1001 may read the software program in the memory 1003, interpret and execute instructions of the software program, process data of the software program, and perform control on a medium access control (medium access control, MAC) layer and a physical layer (physical layer, PHY), to implement the methods in embodiments of this application. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform the steps, methods, or functions performed by the first communication apparatus in the foregoing method embodiments, the processor 1001 may be configured to perform step S101 in FIG. 8, and/or configured to perform another process of the technology described in this specification; and the transceiver 1002 may be configured to perform step S102 in FIG. 8, and/or configured to perform another process of the technology described in this specification.

For example, when the communication apparatus is configured to perform the steps, methods, or functions performed by the second communication apparatus in the foregoing method embodiments, the processor 1001 may be configured to perform step S104 in FIG. 8, and/or configured to perform another process of the technology described in this specification; and the transceiver 1002 may be configured to perform step S103 in FIG. 8, and/or configured to perform another process of the technology described in this specification.

For example, when the communication apparatus is configured to perform the steps, methods, or functions performed by the first communication apparatus in the foregoing method embodiments, the processor 1001 may be configured to generate a PPDU sent in step S202 in FIG. 13, and/or configured to perform another process of the technology described in this specification; and the transceiver 1002 may be configured to perform step S202 in FIG. 13, and/or configured to perform another process of the technology described in this specification.

For example, when the communication apparatus is configured to perform the steps, methods, or functions performed by the second communication apparatus in the foregoing method embodiments, the processor 1001 may be configured to generate a trigger frame sent in step S201 in FIG. 13, and/or configured to perform another process of the technology described in this specification; and the transceiver 1002 may be configured to perform step S201 in FIG. 13, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be embedded in the processor 1001. In this case, the processor 1001 may be implemented by hardware.

In an implementation, the communication apparatus may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit

(radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (N-type metal-oxide-semiconductor, NMOS), a p-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may alternatively include more components than those shown in FIG. 15, or the like. This is not limited in this embodiment of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 14, the processing module 802 may be one or more logic circuits, and the transceiver module 801 may be an input/output interface that is also referred to as a communication interface, an interface circuit, an interface, or the like. Alternatively, the transceiver module 801 may be a sending module and a receiving module. The sending module may be an output interface, and the receiving module may be an input interface. The sending module and the receiving module are integrated into one module, for example, an input/output interface. FIG. 16 is a diagram of still another structure of a communication apparatus according to an embodiment of this application. As shown in FIG. 16, the communication apparatus shown in FIG. 16 includes a logic circuit 901 and an interface 902. That is, the processing module 802 may be implemented by using the logic circuit 901, and the transceiver module 801 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 16 shows an example in which the communication apparatus is a chip. The chip includes the logic circuit 901 and the interface 902.

In this embodiment of this application, the logic circuit and the interface may further be coupled to each other. A specific connection manner between the logic circuit and the interface is not limited in this embodiment of this application.

For example, when the communication apparatus is configured to perform the methods, functions, or steps performed by the first communication apparatus in the foregoing method embodiments, the interface 902 is configured to input a trigger frame, where the trigger frame includes indication information, and the indication information indicates a dRU in a dRU tone plan corresponding to a first bandwidth; the logic circuit 901 is configured to generate a PPDU; and the interface 902 is further configured to output the PPDU by using the dRU indicated by the indication information.

For example, when the communication apparatus is configured to perform the methods, functions, or steps performed by the second communication apparatus in the foregoing method embodiments, the logic circuit 901 is configured to generate a trigger frame; the interface 902 is configured to output the trigger frame, where the trigger frame includes indication information, and the indication information indicates a dRU in a dRU tone plan corresponding to the first bandwidth; and the interface 902 is further configured to input a PPDU on the dRU indicated by the indication information.

In this embodiment of this application, for descriptions of the indication information, the dRU tone plan corresponding to the first bandwidth, the dRU, the PPDU, and the like, refer to the descriptions in the foregoing method embodiments (as shown in FIG. 13). Details are not described herein again.

For example, when the communication apparatus is configured to perform the methods, functions, or steps performed by the first communication apparatus in the foregoing method embodiments, the logic circuit 901 is configured to generate a PPDU based on a dRU tone plan for a 40 MHz/80 MHz/160 MHz bandwidth; and the interface 902 is configured to output the PPDU.

For example, when the communication apparatus is configured to perform the methods, functions, or steps performed by the second communication apparatus in the foregoing method embodiments, the interface 902 is configured to input a PPDU based on a dRU tone plan for a 40 MHz/80 MHz/160 MHz bandwidth; and the logic circuit 901 is configured to process the PPDU.

In this embodiment of this application, for descriptions of the dRU tone plan for the 40 MHz/80 MHz/160 MHz bandwidth, the 52-tone dRU, the 106-tone dRU, and the like, refer to the descriptions in the foregoing method embodiments (as shown in FIG. 8). Details are not described herein again.

It may be understood that the communication apparatus shown in embodiments of this application may implement the methods provided in embodiments of this application in a form of hardware, or may implement the methods provided in embodiments of this application in a form of software. This is not limited in embodiments of this application.

For specific implementations of the embodiment shown in FIG. 16, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing method embodiments.

In addition, this application further provides a computer program. The computer program is used to implement operations and/or processing performed by the first communication apparatus in the method provided in this application.

This application further provides a computer program. The computer program is used to implement operations and/or processing performed by a second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by a second communication apparatus in the method provided in this application.

This application further provides a computer program product. The computer program product includes computer code or a computer program. When the computer code or the computer program is run on a computer, operations and/or processing performed by a first communication apparatus in the method provided in this application is enabled to be performed.

This application further provides a computer program product. The computer program product includes computer code or a computer program. When the computer code or the computer program is run on a computer, operations and/or processing performed by a second communication apparatus in the method provided in this application is enabled to be performed.

In the several embodiments provided in this application, it should be understood that the disclosed system, apparatus, and method may be implemented in another manner. For example, the apparatus embodiments described above are merely examples. For example, division into the units is merely logical function division. In actual implementation, another division manner may be used. For example, a plurality of units or components may be combined or integrated into another system, or some features may be ignored or not performed. In addition, mutual couplings or direct couplings or communication connections shown or discussed may be indirect couplings or communication connections through some interfaces, apparatuses, or units, or may be connections in electrical, mechanical, or other forms.

The units described as separate components may or may not be physically separate, and components displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method based on a distributed resource unit, comprising:
receiving a trigger frame, wherein the trigger frame comprises indication information, the indication information indicates a distributed resource unit dRU in a dRU tone plan corresponding to a first bandwidth, and the dRU tone plan corresponding to the first bandwidth comprises any one of the following: nine 52-tone dRUs when the first bandwidth is 40 MHz; 18 52-tone dRUs when the first bandwidth is 80 MHz; 36 52-tone dRUs when the first bandwidth is 160 MHz; 72 52-tone dRUs when the first bandwidth is 320 MHz; nine 106-tone dRUs when the first bandwidth is 80 MHz; 18 106-tone dRUs when the first bandwidth is 160 MHz; or 36 106-tone dRUs when the first bandwidth is 320 MHz; and
sending a physical layer protocol data unit PPDU by using the dRU indicated by the indication information.

2. A communication method based on a distributed resource unit, comprising:
sending a trigger frame, wherein the trigger frame comprises indication information, the indication information indicates a distributed resource unit dRU in a dRU tone plan corresponding to a first bandwidth, and the dRU tone plan corresponding to the first bandwidth comprises any one of the following: nine 52-tone dRUs when the first bandwidth is 40 MHz; 18 52-tone dRUs when the first bandwidth is 80 MHz; 36 52-tone dRUs when the first bandwidth is 160 MHz; 72 52-tone dRUs when the first bandwidth is 320 MHz; nine 106-tone dRUs when the first bandwidth is 80 MHz; 18 106-tone dRUs when the first bandwidth is 160 MHz; or 36 106-tone dRUs when the first bandwidth is 320 MHz; and
receiving a physical layer protocol data unit PPDU on the dRU indicated by the indication information.

3. The method according to claim 1 or 2, wherein the indication information comprises a resource unit RU allocation subfield and a primary/secondary 160 subfield, and the RU allocation subfield and the primary/secondary 160 subfield are used to jointly indicate the dRU.

4. The method according to claim 3, wherein
the nine 52-tone dRUs when the first bandwidth is 40 MHz comprise 52-tone dRUs whose physical dRU indexes are 1 to 9;
the 18 52-tone dRUs when the first bandwidth is 80 MHz comprise 52-tone dRUs whose physical dRU indexes are 1 to 18;
the 36 52-tone dRUs when the first bandwidth is 160 MHz comprise 52-tone dRUs whose physical dRU indexes are 1 to 36;
the 72 52-tone dRUs when the first bandwidth is 320 MHz comprise 52-tone dRUs whose physical dRU indexes are 1 to 72;
the nine 106-tone dRUs when the first bandwidth is 80 MHz comprise 106-tone dRUs whose physical dRU indexes are 1 to 9;
the 18 106-tone dRUs when the first bandwidth is 160 MHz comprise 106-tone dRUs whose physical dRU indexes are 1 to 18; and
the 36 106-tone dRUs when the first bandwidth is 320 MHz comprise 106-tone dRUs whose physical dRU indexes are 1 to 36.

5. The method according to claim 4, wherein an indication/interpretation of the primary/secondary 160 subfield and the RU allocation subfield comprises one or more of the following:
| Primary/secondary 160 subfield | B0 of the RU allocation subfield | B7 to B1 of the RU allocation subfield | Bandwidth BW (MHz) | dRU size | dRU index | Physical dRU index |
|---|---|---|---|---|---|---|
| 0 | | First value | 40 | 52 | dRU 9 | dRU 9 |
| 0 to 3 | | Second value and third value | 80, 160, or 320 | 52 | dRU 17 and dRU 18, respectively | 16×(BW/80-1)+2×N+dRU index |
| 0 to 3 | | Fourth value | 80, 160, or 320 | 106 | dRU 9 | 8×(BW/80-1)+N+dRU index |
| 0 to 3 | | Fifth value | 80, 160, or 320 | 26 | dRU 19 | 37×N + dRU index |
wherein a value of N is determined based on some or all of the bandwidth BW, the primary/secondary 160 subfield, the B0 bit of the RU allocation subfield, and configuration information.

6. The method according to claim 5, wherein the fifth value is 18.

7. The method according to claim 5 or 6, wherein at least one of the first value, the second value, the third value, and the fourth value is a value in a range of 107 to 127.

8. The method according to any one of claims 1 to 7, wherein the 52-tone dRU whose physical dRU index is 9 when the first bandwidth is 40 MHz comprises subcarriers of 26-tone dRUs whose physical dRU indexes are 5 and 14.

9. The method according to claim 8, wherein indexes of subcarriers comprised in the 26-tone dRU whose physical dRU index is 5 are [-229, -203, -185, -167, -153, -135, -117, -99, -81, - 63, -45, -31, -13, 13, 31, 45, 63, 81, 99, 117, 135, 153, 167, 185, 203, 229]; and
indexes of subcarriers comprised in the 26-tone dRU whose physical dRU index is 14 are [-234, -216, -198, -180, -162, -148, -130, -112, -86, -68, -50, -36, -18, 18, 36, 50, 68, 86, 112, 130, 148, 162, 180, 198, 216, 234].

10. The method according to any one of claims 1 to 7, wherein the 52-tone dRU whose physical dRU index is 17 when the first bandwidth is 80 MHz comprises subcarriers of 26-tone dRUs whose physical dRU indexes are 5 and 14; and the 52-tone dRU whose physical dRU index is 18 when the first bandwidth is 80 MHz comprises subcarriers of 26-tone dRUs whose physical dRU indexes are 24 and 33.

11. The method according to any one of claims 1 to 7, wherein the 106-tone dRU whose physical dRU index is 9 when the first bandwidth is 80 MHz comprises subcarriers of 26-tone dRUs whose physical dRU indexes are 5, 14, 24, and 33, and subcarriers whose subcarrier indexes are [-19, 19].

12. The method according to claim 10 or 11, wherein indexes of subcarriers comprised in the 26-tone dRU whose physical dRU index is 5 are [-477, -444, -398, -362, -329, -291, -255, - 222, -185, -140, -107, -70, -33, 33, 70, 107, 140, 185, 222, 255, 291, 329, 362, 398, 444, 477];
indexes of subcarriers comprised in the 26-tone dRU whose physical dRU index is 14 are [-495, -462, -425, -380, -347, -310, -273, -237, -204, -158, -122, -89, -51, 51, 89, 122, 158, 204, 237, 273, 310, 347, 380, 425, 462, 495];
indexes of subcarriers comprised in the 26-tone dRU whose physical dRU index is 24 are [-482, -449, -411, -375, -342, -305, -260, -227, -190, -153, -117, -84, -38, 38, 84, 117, 153, 190, 227, 260, 305, 342, 375, 411, 449, 482]; and
indexes of subcarriers comprised in the 26-tone dRU whose physical dRU index is 33 are [-500, -467, -430, -393, -357, -324, -278, -242, -209, -171, -135, -102, -65, 65, 102, 135, 171, 209, 242, 278, 324, 357, 393, 430, 467, 500].

13. The method according to any one of claims 1 to 7, wherein the 106-tone dRU whose physical dRU index is 9 when the first bandwidth is 80 MHz comprises subcarriers of 26-tone dRUs whose physical dRU indexes are 5, 14, 24, and 33, and subcarriers whose subcarrier indexes are [-32, 32].

14. The method according to claim 10 or 13, wherein indexes of subcarriers comprised in the 26-tone dRU whose physical dRU index is 5 are [-477, -445, -401, -365, -333, -297, -261, - 229, -193, -149, -117, -81, -45, 45, 81, 117, 149, 193, 229, 261, 297, 333, 365, 401, 445, 477]; and
indexes of subcarriers comprised in the 26-tone dRU whose physical dRU index is 14 are [-495, -463, -427, -383, -351, -315, -279, -243, -211, -167, -131, -99, -63, 63, 99, 131, 167, 211, 243, 279, 315, 351, 383, 427, 463, 495];
indexes of subcarriers comprised in the 26-tone dRU whose physical dRU index is 24 are [-482, -450, -414, -378, -346, -310, -266, -234, -198, -162, -126, -94, -50, 50, 94, 126, 162, 198, 234, 266, 310, 346, 378, 414, 450, 482]; and
indexes of subcarriers comprised in the 26-tone dRU whose physical dRU index is 33 are [-500, -468, -432, -396, -360, -328, -284, -248, -216, -180, -144, -112, -76, 76, 112, 144, 180, 216, 248, 284, 328, 360, 396, 432, 468, 500].

15. The method according to any one of claims 1 to 7, wherein the 52-tone dRU whose physical dRU index is 33 when the first bandwidth is 160 MHz comprises subcarriers of 26-tone dRUs whose physical dRU indexes are 5 and 14;
the 52-tone dRU whose physical dRU index is 34 when the first bandwidth is 160 MHz comprises subcarriers of 26-tone dRUs whose physical dRU indexes are 24 and 33;
the 52-tone dRU whose physical dRU index is 35 when the first bandwidth is 160 MHz comprises subcarriers of 26-tone dRUs whose physical dRU indexes are 42 and 51; and
the 52-tone dRU whose physical dRU index is 36 when the first bandwidth is 160 MHz comprises subcarriers of 26-tone dRUs whose physical dRU indexes are 61 and 70.

16. The method according to any one of claims 1 to 7, wherein the 106-tone dRU whose physical dRU index is 17 when the first bandwidth is 160 MHz comprises subcarriers of 26-tone dRUs whose physical dRU indexes are 5, 14, 24, and 33, and subcarriers whose subcarrier indexes are [-493, 493]; and
the 106-tone dRU whose physical dRU index is 18 when the first bandwidth is 160 MHz comprises subcarriers of 26-tone dRUs whose physical dRU indexes are 42, 51, 61, and 70, and subcarriers whose subcarrier indexes are [-531, 531].

17. The method according to claim 15 or 16, wherein indexes of subcarriers comprised in the 26-tone dRU whose physical dRU index is 5 are [-955, -873, -803, -733, -651, -581, -448, - 378, -304, -234, -156, -84, -14, 14, 84, 156, 234, 304, 378, 448, 581, 651, 733, 803, 873, 955];
indexes of subcarriers comprised in the 26-tone dRU whose physical dRU index is 14 are [-987, -909, -841, -765, -695, -619, -545, -410, -342, -272, -188, -120, -46, 46, 120, 188, 272, 342, 410, 545, 619, 695, 765, 841, 909, 987];
indexes of subcarriers comprised in the 26-tone dRU whose physical dRU index is 24 are [-973, -891, -821, -747, -669, -601, -474, -396, -324, -254, -170, -102, -32, 32, 102, 170, 254, 324, 396, 474, 601, 669, 747, 821, 891, 973];
indexes of subcarriers comprised in the 26-tone dRU whose physical dRU index is 33 are [-1005, -935, -859, -785, -715, -633, -563, -428, -360, -286, -208, -138, -64, 64, 138, 208, 286, 360, 428, 563, 633, 715, 785, 859, 935, 1005];
indexes of subcarriers comprised in the 26-tone dRU whose physical dRU index is 42 are [-960, -886, -816, -738, -664, -596, -461, -391, -309, -239, -165, -89, -19, 19, 89, 165, 239, 309, 391, 461, 596, 664, 738, 816, 886, 960];
indexes of subcarriers comprised in the 26-tone dRU whose physical dRU index is 51 are [-992, -922, -854, -770, -700, -628, -550, -423, -355, -277, -203, -133, -51, 51, 133, 203, 277, 355, 423, 550, 628, 700, 770, 854, 922, 992];
indexes of subcarriers comprised in the 26-tone dRU whose physical dRU index is 61 are [-978, -904, -836, -752, -682, -614, -479, -405, -329, -259, -183, -115, -37, 37, 115, 183, 259, 329, 405, 479, 614, 682, 752, 836, 904, 978]; and
indexes of subcarriers comprised in the 26-tone dRU whose physical dRU index is 70 are [-1010, -940, -868, -790, -720, -646, -576, -443, -373, -291, -221, -151, -69, 69, 151, 221, 291, 373, 443, 576, 646, 720, 790, 868, 940, 1010].

18. A communication method based on a distributed resource unit, comprising:
generating a physical layer protocol data unit PPDU based on a distributed resource unit dRU tone plan for a 40 MHz bandwidth, wherein the dRU tone plan comprises nine 52-tone dRUs; and
sending the PPDU.

19. A communication method based on a distributed resource unit, comprising:
receiving a physical layer protocol data unit PPDU based on a distributed resource unit dRU tone plan for a 40 MHz bandwidth, wherein the dRU tone plan comprises nine 52-tone dRUs; and
processing the PPDU.

20. The method according to claim 18 or 19, wherein the 52-tone dRU whose index is 9 in the nine 52-tone dRUs comprises subcarriers of 26-tone dRUs whose indexes are 5 and 14.

21. The method according to claim 20, wherein indexes of subcarriers comprised in the 26-tone dRU whose index is 5 are [-229, -203, -185, -167, -153, -135, -117, -99, -81, -63, -45, - 31, -13, 13, 31, 45, 63, 81, 99, 117, 135, 153, 167, 185, 203, 229]; and
indexes of subcarriers comprised in the 26-tone dRU whose index is 14 are [-234, -216, - 198, -180, -162, -148, -130, -112, -86, -68, -50, -36, -18, 18, 36, 50, 68, 86, 112, 130, 148, 162, 180, 198, 216, 234].

22. A communication method based on a distributed resource unit, comprising:
generating a physical layer protocol data unit PPDU based on a distributed resource unit dRU tone plan for an 80 MHz bandwidth, wherein the dRU tone plan comprises 18 52-tone dRUs or nine 106-tone dRUs; and
sending the PPDU.

23. A communication method based on a distributed resource unit, comprising:
receiving a physical layer protocol data unit PPDU based on a distributed resource unit dRU tone plan for an 80 MHz bandwidth, wherein the dRU tone plan comprises 18 52-tone dRUs or nine 106-tone dRUs; and
processing the PPDU.

24. The method according to claim 22 or 23, wherein the 52-tone dRU whose index is 17 in the 18 52-tone dRUs comprises subcarriers of 26-tone dRUs whose indexes are 5 and 14; and
the 52-tone dRU whose index is 18 in the 18 52-tone dRUs comprises subcarriers of 26-tone dRUs whose indexes are 24 and 33.

25. The method according to claim 22 or 23, wherein the 106-tone dRU whose index is 9 in the nine 106-tone dRUs comprises subcarriers of 26-tone dRUs whose indexes are 5, 14, 24, and 33, and subcarriers whose subcarrier indexes are [-19, 19].

26. The method according to claim 24 or 25, wherein indexes of subcarriers comprised in the 26-tone dRU whose index is 5 are [-477, -444, -398, -362, -329, -291, -255, -222, -185, -140, -107, -70, -33, 33, 70, 107, 140, 185, 222, 255, 291, 329, 362, 398, 444, 477];
indexes of subcarriers comprised in the 26-tone dRU whose index is 14 are [-495, -462, - 425, -380, -347, -310, -273, -237, -204, -158, -122, -89, -51, 51, 89, 122, 158, 204, 237, 273, 310, 347, 380, 425, 462, 495];
indexes of subcarriers comprised in the 26-tone dRU whose index is 24 are [-482, -449, - 411, -375, -342, -305, -260, -227, -190, -153, -117, -84, -38, 38, 84, 117, 153, 190, 227, 260, 305, 342, 375, 411, 449, 482]; and
indexes of subcarriers comprised in the 26-tone dRU whose index is 33 are [-500, -467, - 430, -393, -357, -324, -278, -242, -209, -171, -135, -102, -65, 65, 102, 135, 171, 209, 242, 278, 324, 357, 393, 430, 467, 500].

27. The method according to claim 22 or 23, wherein the 106-tone dRU whose index is 9 in the nine 106-tone dRUs comprises subcarriers of 26-tone dRUs whose indexes are 5, 14, 24, and 33, and subcarriers whose subcarrier indexes are [-32, 32].

28. The method according to claim 24 or 27, wherein indexes of subcarriers comprised in the 26-tone dRU whose index is 5 are [-477, -445, -401, -365, -333, -297, -261, -229, -193, -149, -117, -81, -45, 45, 81, 117, 149, 193, 229, 261, 297, 333, 365, 401, 445, 477];
indexes of subcarriers comprised in the 26-tone dRU whose index is 14 are [-495, -463, - 427, -383, -351, -315, -279, -243, -211, -167, -131, -99, -63, 63, 99, 131, 167, 211, 243, 279, 315, 351, 383, 427, 463, 495];
indexes of subcarriers comprised in the 26-tone dRU whose index is 24 are [-482, -450, - 414, -378, -346, -310, -266, -234, -198, -162, -126, -94, -50, 50, 94, 126, 162, 198, 234, 266, 310, 346, 378, 414, 450, 482]; and
indexes of subcarriers comprised in the 26-tone dRU whose index is 33 are [-500, -468, - 432, -396, -360, -328, -284, -248, -216, -180, -144, -112, -76, 76, 112, 144, 180, 216, 248, 284, 328, 360, 396, 432, 468, 500].

29. A communication method based on a distributed resource unit, comprising:
generating a physical layer protocol data unit PPDU based on a distributed resource unit dRU tone plan for a 160 MHz bandwidth, wherein the dRU tone plan comprises 36 52-tone dRUs or 18 106-tone dRUs; and
sending the PPDU.

30. A communication method based on a distributed resource unit, comprising:
receiving a physical layer protocol data unit PPDU based on a distributed resource unit dRU tone plan for a 160 MHz bandwidth, wherein the dRU tone plan comprises 36 52-tone dRUs or 18 106-tone dRUs; and
processing the PPDU.

31. The method according to claim 29 or 30, wherein the 52-tone dRU whose index is 33 in the 36 52-tone dRUs comprises subcarriers of 26-tone dRUs whose indexes are 5 and 14;
the 52-tone dRU whose index is 34 in the 36 52-tone dRUs comprises subcarriers of 26-tone dRUs whose indexes are 24 and 33;
the 52-tone dRU whose index is 35 in the 36 52-tone dRUs comprises subcarriers of 26-tone dRUs whose indexes are 42 and 51; and
the 52-tone dRU whose index is 36 in the 36 52-tone dRUs comprises subcarriers of 26-tone dRUs whose indexes are 61 and 70.

32. The method according to claim 29 or 30, wherein the 106-tone dRU whose index is 17 in the 18 106-tone dRUs comprises subcarriers of 26-tone dRUs whose indexes are 5, 14, 24, and 33, and subcarriers whose subcarrier indexes are [-493, 493]; and
the 106-tone dRU whose index is 18 in the 18 106-tone dRUs comprises subcarriers of 26-tone dRUs whose indexes are 42, 51, 61, and 70, and subcarriers whose subcarrier indexes are [-531, 531].

33. The method according to claim 31 or 32, wherein indexes of subcarriers comprised in the 26-tone dRU whose index is 5 are [-955, -873, -803, -733, -651, -581, -448, -378, -304, -234, -156, -84, -14, 14, 84, 156, 234, 304, 378, 448, 581, 651, 733, 803, 873, 955];
indexes of subcarriers comprised in the 26-tone dRU whose index is 14 are [-987, -909, - 841, -765, -695, -619, -545, -410, -342, -272, -188, -120, -46, 46, 120, 188, 272, 342, 410, 545, 619, 695, 765, 841, 909, 987];
indexes of subcarriers comprised in the 26-tone dRU whose index is 24 are [-973, -891, - 821, -747, -669, -601, -474, -396, -324, -254, -170, -102, -32, 32, 102, 170, 254, 324, 396, 474, 601, 669, 747, 821, 891, 973];
indexes of subcarriers comprised in the 26-tone dRU whose index is 33 are [-1005, -935, - 859, -785, -715, -633, -563, -428, -360, -286, -208, -138, -64, 64, 138, 208, 286, 360, 428, 563, 633, 715, 785, 859, 935, 1005];
indexes of subcarriers comprised in the 26-tone dRU whose index is 42 are [-960, -886, - 816, -738, -664, -596, -461, -391, -309, -239, -165, -89, -19, 19, 89, 165, 239, 309, 391, 461, 596, 664, 738, 816, 886, 960];
indexes of subcarriers comprised in the 26-tone dRU whose index is 51 are [-992, -922, - 854, -770, -700, -628, -550, -423, -355, -277, -203, -133, -51, 51, 133, 203, 277, 355, 423, 550, 628, 700, 770, 854, 922, 992];
indexes of subcarriers comprised in the 26-tone dRU whose index is 61 are [-978, -904, - 836, -752, -682, -614, -479, -405, -329, -259, -183, -115, -37, 37, 115, 183, 259, 329, 405, 479, 614, 682, 752, 836, 904, 978]; and
indexes of subcarriers comprised in the 26-tone dRU whose index is 70 are [-1010, -940, - 868, -790, -720, -646, -576, -443, -373, -291, -221, -151, -69, 69, 151, 221, 291, 373, 443, 576, 646, 720, 790, 868, 940, 1010].

34. A communication apparatus, comprising a module configured to perform the method according to any one of claims 1 to 33.

35. A communication apparatus, comprising:
one or more processors, wherein the one or more processors are coupled to one or more memories; and
the one or more memories are configured to store a computer program, and the one or more processors are configured to execute the computer program stored in the one or more memories, to enable the communication apparatus to perform the method according to any one of claims 1 to 33.

36. A communication apparatus, comprising a logic circuit and an interface, wherein the logic circuit is coupled to the interface; and
the interface is configured to input and/or output information, and the logic circuit is configured to perform the method according to any one of claims 1 to 33.

37. A readable storage medium, configured to store a program, wherein the program is executed by one or more processors, to enable an apparatus comprising the one or more processors to perform the method according to any one of claims 1 to 33.

38. A computer program product, wherein when the computer program product is executed, the method according to any one of claims 1 to 33 is performed.

39. A communication system, wherein the communication system comprises a communication apparatus configured to perform the method according to any one of claims 1 and 3 to 17, and a communication apparatus configured to perform the method according to any one of claims 2 to 17; or
the communication system comprises a communication apparatus configured to perform the method according to any one of claims 18, 20, and 21, and a communication apparatus configured to perform the method according to any one of claims 19 to 21; or
the communication system comprises a communication apparatus configured to perform the method according to any one of claims 22 and 24 to 28, and a communication apparatus configured to perform the method according to any one of claims 23 to 28; or
the communication system comprises a communication apparatus configured to perform the method according to any one of claims 29 and 31 to 33, and a communication apparatus configured to perform the method according to any one of claims 30 to 33.
